(19) Europäisches Patentamt
European Patent Office
Office européen des brevets

(11) EP 4 306 575 A1

(12) EUROPEAN PATENT APPLICATION
published in accordance with Art. 153(4) EPC

(43) Date of publication:
**17.01.2024 Bulletin 2024/03**

(21) Application number: **22766801.9**

(22) Date of filing: **21.02.2022**

(51) International Patent Classification (IPC):
***C08J 5/18*** *(2006.01)* ***B29C 55/12*** *(2006.01)*
***B32B 15/082*** *(2006.01)* ***C08K 3/22*** *(2006.01)*
***C08L 25/06*** *(2006.01)* ***C08L 71/12*** *(2006.01)*
***H01G 4/32*** *(2006.01)*

(52) Cooperative Patent Classification (CPC):
**B29C 55/12; B32B 15/082; C08J 5/18; C08K 3/22; C08L 25/06; C08L 71/12; H01G 4/32**

(86) International application number:
**PCT/JP2022/006969**

(87) International publication number:
**WO 2022/190838 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2021 JP 2021039299**
**02.02.2022 JP 2022015089**
**02.02.2022 JP 2022015091**

(71) Applicant: **Oji Holdings Corporation**
**Chuo-ku**
**Tokyo 104-0061 (JP)**

(72) Inventors:
- **SUEI, Takumi**
  **Tokyo 104-0061 (JP)**
- **IKEDA, Kazuo**
  **Tokyo 104-0061 (JP)**
- **KAKEHI, Akihiro**
  **Tokyo 104-0061 (JP)**

(74) Representative: **Müller-Boré & Partner Patentanwälte PartG mbB**
**Friedenheimer Brücke 21**
**80639 München (DE)**

# (54) FILM SUITABLE FOR CAPACITOR USE

(57) An object is to provide a film that provides a capacitor excellent in safety function operability, and that has a high level of dielectric breakdown strength at high temperatures and good element-winding suitability. The object is achieved by a film containing a syndiotactic polystyrene resin and a polyphenylene ether resin, the content of the syndiotactic polystyrene resin in the film being 50 mass% or higher, the content of the polyphenylene ether resin in the film being 10 mass% or higher, wherein (A) the film contains titanium oxide particles as inorganic particles, and the content of the titanium oxide particles in the film is 0.55 mass% or higher and 3 mass% or lower, and/or (B) at least one surface of the film has a reduced peak height Spk of 0.05 um or more and 0.30 um or less.

## Description

### Technical Field

The present invention relates to a film and the like. In particular, the present invention relates to a film suitable for capacitor applications.

### Background Art

Conventionally, in electronic devices, electrical devices, etc., capacitors using resin films are used as, for example, high-voltage capacitors, filter capacitors for various switching power supplies, converters, and inverters, and smoothing capacitors. Resin film capacitors are also used in inverters and converters that control the drive motors of electric vehicles and hybrid vehicles, for which demand is increasing in recent years.

Capacitors, in particular, capacitors for vehicles, are increasingly used in high-temperature environments. For example, the use of semiconductors with high heat resistance (silicon carbide semiconductors etc.) has been recently increasing in devices that control the drive motors of vehicles (inverters, converters, etc.). Along with this, higher heat resistance is also required for capacitors used in these devices. Therefore, a resin film containing syndiotactic polystyrene is used as a resin film having high heat resistance (Patent Literature (PTL) 1).

### Citation List

#### Patent Literature

PTL 1: JP2011-111592A

### Summary of Invention

#### Technical Problem

In view of the growing need for long-term reliability, the present inventors have focused on the fact that the safety function operability of a capacitor element is important.

In a capacitor element, margins where no metal is deposited are usually created by pattern deposition, and the capacitor element is divided into a group of small electrodes. In this process, a fuse is provided so that when a part of the group of small electrodes breaks down, the current is concentrated in the fuse and the metal film scatters. As a result, the small electrode that caused the dielectric breakdown is detached and insulation of the whole element is restored. Therefore, scattering the metal film using a fuse is important for safety function operability. As the voltage is increased, dielectric breakdown of a small electrode occurs, but when the safety function operation is activated, insulation of the whole element is maintained. On the other hand, when the safety function operation does not work, the whole element short-circuits and the performance as a capacitor is lost. Although roughening the surface of a film for capacitors is considered better from the standpoint of safety function operability, simply roughening the film surface usually results in a decrease in dielectric breakdown strength.

Further, in particular, films for automotive capacitors (e.g., for xEVs) are increasingly in need of thinner films to meet the demand for smaller size and higher efficiency. However, a thin film has a low element-winding suitability; therefore, there are problems, such as that in the element winding process during the manufacture of a capacitor, winding misalignment tends to occur easily.

Patent Literature (PTL) 1 discloses a film containing a syndiotactic polystyrene resin having excellent heat resistance and a polyphenylene ether resin, the film having high dielectric breakdown voltage and high element-winding suitability. However, PLT 1 does not mention safety function operability.

Accordingly, a primary object of the present invention is to provide a film capable of obtaining a capacitor having excellent safety function operability and having high dielectric breakdown strength at high temperatures and excellent element-winding suitability.

#### Solution to Problem

As a result of intensive research, the present inventors found that the object can be achieved by a film containing a syndiotactic polystyrene resin, the content of which in the film is 50 mass% or higher, and a polyphenylene ether resin, the content of which in the film is 10 mass% or higher, wherein (A) the film contains titanium oxide particles as inorganic particles, and the content of the titanium oxide particles in the film is 0.55 mass% or higher and 3 mass% or lower, and/or

(B) at least one surface of the film has a reduced peak height Spk of 0.05 um or more and 0.30 um or less. The inventors conducted further research based on this finding and completed the present invention. Specifically, the present invention includes the following aspects.

Item 1. A film comprising

a syndiotactic polystyrene resin, and
a polyphenylene ether resin,

the content of the syndiotactic polystyrene resin in the film being 50 mass% or higher,
the content of the polyphenylene ether resin in the film being 10 mass% or higher,

wherein

(A) the film contains titanium oxide particles as inorganic particles, and the content of the titanium oxide particles in the film is 0.55 mass% or higher and 3 mass% or lower, and/or
(B) at least one surface of the film has a reduced peak height Spk of 0.05 um or more and 0.30 um or less.

Item 2. The film according to Item 1, wherein the content of the syndiotactic polystyrene resin in the film is 50 mass% or higher and 85 mass% or lower.
Item 3. The film according to Item 1 or 2, wherein the content of the polyphenylene ether resin in the film is 10 mass% or higher and 45 mass% or lower.
Item 4. The film according to any one of Items 1 to 3, comprising a styrene-based thermoplastic elastomer.
Item 5. The film according to Item 4, wherein the content of the styrene-based thermoplastic elastomer in the film is 1 mass% or higher and 20 mass% or lower.
Item 6. The film according to Item 4 or 5, wherein the styrene-based thermoplastic elastomer is a styrene-ethylene-butylene-styrene block copolymer (SEES).
Item 7. The film according to any one of Items 1 to 6, comprising an antioxidant.
Item 8. The film according to Item 7, wherein the content of the antioxidant in the film is 0.01 mass% or higher and lower than 0.5 mass%.
Item 9. The film according to Item 7 or 8, wherein the antioxidant contains a hindered phenol antioxidant and a phosphorus antioxidant.
Item 10. The film according to any one of Items 1 to 9, comprising inorganic particles.
Item 11. The film according to Item 10, wherein the content of the inorganic particles in the film is 0.2 mass% or higher and 1.0 mass% or lower.
Item 12. The film according to Item 10 or 11, wherein the inorganic particles have an average particle size of 0.1 um or more and 0.5 um or less.
Item 13. The film according to any one of Items 10 to 12, wherein the inorganic particles are metal oxide particles.
Item 14. The film according to any one of Items 1 to 13, comprising titanium oxide particles, wherein the titanium oxide particles have an average particle size of 0.1 um or more and 0.25 um or less.
Item 15. The film according to any one of Items 1 to 14, wherein at least one surface of the film has a reduced peak height Spk of 0.05 um or more and 0.30 um or less.
Item 16. The film according to any one of Items 1 to 15, comprising a film-like layer of a resin composition containing two or more kinds of modified polyphenylene ethers having different melt flow rates.
Item 17. The film according to any one of Items 1 to 16, having a thermal shrinkage rate of 1% or higher and 10% or lower in a film-forming direction.
Item 18. The film according to any one of Items 1 to 17, which is a biaxially stretched film.
Item 19. The film according to any one of Items 1 to 18, which is a single-layered film.
Item 20. The film according to any one of Items 1 to 19, having a thickness of 10 um or less.
Item 21. The film according to any one of Items 1 to 20, which is for use in a capacitor.
Item 22. A film integrated with a metal layer, comprising

the film of any one of Items 1 to 21, and
a metal layer stacked on one or both sides of the film.

Item 23. A capacitor comprising the film of any one of Items 1 to 21 or the film integrated with a metal layer of Item 22.

Advantageous Effects of Invention

The present invention provides a film that provides a capacitor excellent in safety function operability, and that has a high level of dielectric breakdown strength at high temperatures and good element-winding suitability. In a preferred embodiment, the film of the present invention has high film-forming stability.

Description of Embodiments

In the present specification, the terms "comprise" and "contain" include the concepts of comprising, containing, consisting essentially of, and consisting of.

The content of each component in the film of the present invention is calculated from the component content of each raw material used, if known, and the mixing ratio of the raw materials. If raw materials with an unknown component content are used, the content of each component in the raw materials is measured according to the method described in the "(1-3) Measurement and Calculation of Content of Each Component in Biaxially Stretched Film" section of the Examples, and the content of each component in the film of the present invention is calculated from the contents measured above and the mixing ratio of the raw materials. If the content ratio of raw materials is unknown, the content of each component in the film of the present invention is calculated according to the method described in the "(1-3) Measurement and Calculation of Content of Each Component in Biaxially Stretched Film" section of the Examples.

1. Film

In an embodiment, the present invention relates to a film comprising a syndiotactic polystyrene resin and a polyphenylene ether resin, the content of the syndiotactic polystyrene resin in the film being 50 mass% or higher, the content of the polyphenylene ether resin in the film being 10 mass% or higher, wherein (A) the film contains titanium oxide particles as inorganic particles, and the content of the titanium oxide particles in the film is 0.55 mass% or higher and 3 mass% or lower, and/or (B) at least one surface of the film has a reduced peak height Spk of 0.05 um or more and 0.30 um or less (in the present specification, "the film of the present invention"). The film will be explained below.

The syndiotactic polystyrene resin is not particularly limited as long as it is a polystyrene resin having a syndiotactic structure. "Syndiotactic structure" means that the stereochemical structure is a syndiotactic structure, i.e., a three-dimensional structure in which phenyl groups or substituted phenyl groups (side chains) are alternately located in opposite directions with respect to the main chain formed of carbon-carbon bonds. Tacticity is generally quantified according to nuclear magnetic resonance spectroscopy using a carbon isotope ($^{13}$C-NMR spectroscopy) and can be indicated by the proportion of continuous multiple structural units, such as a diad for two units, a triad for three units, and a pentad for five units.

The syndiotactic polystyrene resin, for example, in the form of a racemic diad, has a syndiotacticity of, for example, 75% or higher, and preferably 85% or higher. Further, the syndiotactic polystyrene resin, for example, in the form of a racemic pentad, has a syndiotacticity of, for example, 30% or higher, and preferably 50% or higher.

Specific examples of syndiotactic polystyrene resins include polystyrene, poly(alkylstyrene), poly(halogenated styrene), poly(halogenated alkylstyrene), poly(alkoxystyrene), poly(vinyl benzoate), hydrogenated polymers of these, mixtures of these, and copolymers containing these as main components.

Examples of poly(alkylstyrene) include poly(methylstyrene), poly(ethylstyrene), poly(isopropylstyrene), poly(tertiary butylstyrene), poly(phenylstyrene), poly(vinyl styrene), and poly(vinylnaphthalene). Examples of poly(halogenated styrene) include poly(chlorostyrene), poly(bromostyrene), and poly(fluorostyrene). Examples of poly(halogenated alkylstyrene) include poly(chloromethylstyrene). Examples of poly(alkoxystyrene) include poly(methoxystyrene) and poly(ethoxystyrene).

Particularly preferred syndiotactic polystyrene resins among these are polystyrene, poly(p-methylstyrene), poly(m-methylstyrene), poly(p-tertiary butylstyrene), poly(p-chlorostyrene), poly(m-chlorostyrene), poly(p-fluorostyrene), hydrogenated polystyrene, and styrene-alkylstyrene copolymers, such as a copolymer of styrene and p-methylstyrene.

The molecular weight of the syndiotactic polystyrene resin is not particularly limited. For example, the mass average molecular weight (weight average molecular weight) is 10,000 or more and 3 million or less, preferably 50,000 or more and 1 million or less, and more preferably 100,000 or more and 500,000 or less. The mass average molecular weight is a value as measured by gel permeation chromatography at 135°C using 1,2,4-trichlorobenzene as a solvent.

The melting point of the syndiotactic polystyrene resin is not particularly limited. The melting point is, for example, 200°C or higher and 320°C or lower, and preferably 220°C or higher and 280°C or lower. The melting point is a melting peak temperature measured according to JIS K7121:2012.

Syndiotactic polystyrene resins are available from commercial sources or can be produced according to a known method. Syndiotactic polystyrene resin available from commercial sources is, for example, XAREC (registered trademark) (142ZE, 300ZC, 130ZC, or 90ZC) produced by Idemitsu Kosan Co., Ltd.

The syndiotactic polystyrene resins can be used singly or in combination of two or more.

The content of the syndiotactic polystyrene resin in the film of the present invention is 50 mass% or higher. The syndiotactic polystyrene resin is preferably a component contained in the largest amount in the film of the present invention. The content of the syndiotactic polystyrene resin in the film of the present invention is preferably 50 mass% or higher and 85 mass% or lower, more preferably 55 mass% or higher and 83 mass% or lower, still more preferably 58 mass% or higher and 75 mass% or lower, and even more preferably 60 mass% or higher and 70 mass% or lower from the viewpoint of safety function operability, dielectric breakdown strength, element-winding suitability, film-forming stability, etc.

The polyphenylene ether resin is not particularly limited, and is typically a polymer having a structural unit represented by the following formula (1). The polyphenylene ether resin may comprise a single type of repeating structural units, or two or more types of repeating structural units.

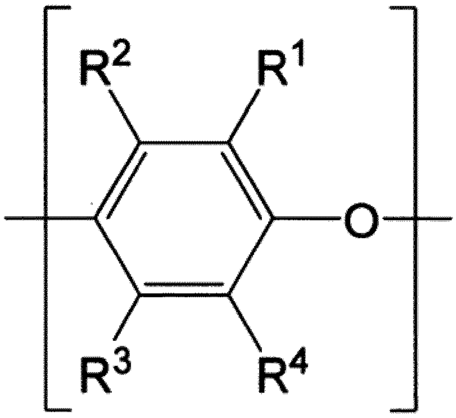

(1)

wherein $R^1$, $R^2$, $R^3$, and $R^4$ are the same or different, and each is a hydrogen atom, a halogen atom, an optionally substituted alkyl group, an optionally substituted alkenyl group, an optionally substituted alkynyl group, an optionally substituted aryl group, an optionally substituted aralkyl group, an optionally substituted alkylaralkyl group, or an optionally substituted alkoxy group.

The halogen atom is not particularly limited, and examples include fluorine, chlorine, bromine, and iodine atoms.

The alkyl group may be a linear, branched, or cyclic (preferably linear or branched, and more preferably linear) alkyl group. The number of carbon atoms in the alkyl group (in the case of a linear or branched alkyl group) is not particularly limited, and is, for example, 1 to 8. The number of carbon atoms is preferably 1 to 4, more preferably 1 to 3, even more preferably 1 or 2, and still even more preferably 1. The number of carbon atoms in the alkyl group (in the case of a cyclic alkyl group) is not particularly limited, and is, for example, 3 to 7, and preferably 4 to 6. Specific examples of the alkyl group include methyl, ethyl, n-propyl, isopropyl, n-butyl, isobutyl, tert-butyl, sec-butyl, n-pentyl, neopentyl, n-hexyl, 3-methylpentyl, n-heptyl, and n-octyl groups.

The alkenyl group may be a linear or branched (preferably linear) alkenyl group. The number of carbon atoms in the alkenyl group is not particularly limited, and is, for example, 2 to 8. The number of carbon atoms is preferably 2 to 4. Specific examples of the alkenyl group include vinyl, allyl, 1-propenyl, isopropenyl, butenyl, pentenyl, and hexenyl groups.

The alkynyl group may be a linear or branched (preferably linear) alkynyl group. The number of carbon atoms in the alkenyl group is not particularly limited, and is, for example, 2 to 8. The number of carbon atoms is preferably 2 to 4. Specific examples of the alkynyl group include ethynyl, propynyl (e.g., 1-propynyl and 2-propynyl (propargyl)), butynyl, pentynyl, and hexynyl groups.

The aryl group is not particularly limited, and is preferably one having 6 to 12 carbon atoms, preferably 6 to 12 carbon atoms, and even more preferably 6 to 8 carbon atoms. The aryl group may be monocyclic or polycyclic (e.g., bicyclic or tricyclic), but is preferably monocyclic. Specific examples of the aryl group include phenyl, naphthyl, biphenyl, pentalenyl, indenyl, anthranyl, tetracenyl, pentacenyl, pyrenyl, perylenyl, fluorenyl, and phenanthryl groups, with a phenyl group being preferable.

The aralkyl group is not particularly limited, and examples include aralkyl groups formed by replacing at least one hydrogen atom (e.g., 1 to 3 hydrogen atoms, and preferably 1 hydrogen atom) of the above alkyl groups with any of the aryl groups above. Specific examples of the aralkyl group include benzyl and phenethyl groups.

The alkylaryl group is not particularly limited, and examples include alkylaryl groups formed by replacing at least one hydrogen atom (e.g., 1 to 3 hydrogen atoms, and preferably 1 hydrogen atom) of the above aryl groups with any of the alkyl groups above. Specific examples of the alkylaryl group include tolyl and xylyl groups.

The alkylaralkyl group is not particularly limited, and examples include alkylaralkyl groups formed by replacing at least one hydrogen atom (e.g., 1 to 3 hydrogen atoms, and preferably 1 hydrogen atom) on the aromatic ring of the above aralkyl groups with any of the alkyl groups above.

The alkoxy group is not particularly limited, and examples include linear or branched (preferably linear) alkoxy groups having 1 to 8 carbon atoms, preferably 1 to 4 carbon atoms, more preferably 1 to 3 carbon atoms, even more preferably 1 or 2 carbon atoms, and still even more preferably 1 carbon atom. Examples of the alkoxy group include methoxy, ethoxy, n-propoxy, isopropoxy, n-butoxy, isobutoxy, sec-butoxy, and t-butoxy groups.

Examples of the substituents of the above alkyl, alkenyl, alkynyl, aryl, aralkyl, alkylaryl, alkylaralkyl, alkoxy, and like groups include a halogen atom and a hydroxyl group. The number of substituents is not particularly limited, and is, for example, 0 to 3, preferably 0 or 1, and more preferably 0.

In a preferred embodiment of the present invention, $R^1$, $R^2$, $R^3$, and $R^4$ are the same or different, and each is a hydrogen atom, a halogen atom, or an optionally substituted alkyl group (preferably an unsubstituted alkyl group). Further, $R^2$ and $R^3$ are preferably a hydrogen atom, and $R^1$ and $R^4$ are preferably a group other than a hydrogen atom.

Specific examples of polyphenylene ether resins include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly(2-(4'-methylphenyl)-1,4-phenylene ether), poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), poly(2,6-dimethyl-1,4-phenylene ether), and like homopolymers, and copolymers thereof. In addition, those modified with a modifying agent, such as maleic anhydride or fumaric acid, are also suitably used. Further, copolymers obtained by graft-copolymerizing or block-copolymerizing vinyl aromatic compounds, such as styrene, with the above polyphenylene ether are also used. Particularly preferred among these is poly(2,6-dimethyl-1,4-phenylene ether).

The number average molecular weight of the polyphenylene ether resin is not particularly limited, but is preferably 1 to 100,000, and more preferably 15,000 to 50,000, from the viewpoint of extrusion moldability and continuous stretchability. The number average molecular weight is determined by converting a molecular weight as measured according to the GPS method to a polystyrene-equivalent value.

The polyphenylene ether resin is available from commercial sources or can be produced according to a known method. For example, polyphenylene ether resins, such as Iupiace (registered trademark) series (e.g., Iupiace (registered trademark) PX100L, PX100F) produced by Mitsubishi Engineering-Plastics Corporation or ZYRON (registered trademark) series (e.g., ZYRON (registered trademark) S201A) produced by Asahi Kasei Corporation, can be suitably used.

The polyphenylene ether resins can be used singly or in combination of two or more.

The content of the polyphenylene ether resin in the film of the present invention is 10 mass% or higher. The content of the polyphenylene ether resin is preferably 10 mass% or higher and 45 mass% or lower, more preferably 12 mass% or higher and 40 mass% or lower, still more preferably 14 mass% or higher and 35 mass% or lower, still more preferably 17 mass% or higher and 30 mass% or lower, and particularly preferably 17 mass% or higher and 25 mass% or lower, from the viewpoints of safety function operability, dielectric breakdown strength, element-winding suitability, film-forming stability, etc.

The film of the present invention preferably contains inorganic particles from the viewpoint of ease of adjusting reduced peak height Spk so as to fall within the range described above, which contributes to safety function operability, dielectric breakdown strength, element-winding suitability, etc.

The inorganic particles are not particularly limited, and examples include particles of metal oxides, such as titanium oxide, zinc oxide, aluminum oxide, and magnesium oxide, and particles of silicon compounds, such as silica and silicone. In addition to these, examples of inorganic particles also include particles of light calcium carbonate, heavy calcium carbonate, kaolin, calcined kaolin, talc, calcium sulfate, barium sulfate, zinc sulfide, zinc carbonate, satin white, aluminum silicate, diatomaceous earth, calcium silicate, magnesium silicate, alumina, colloidal alumina, boehmite, pseudoboehmite, aluminum hydroxide, magnesium carbonate, magnesium hydroxide, zeolite, and smectite. The inorganic particles are, for example, preferably metal oxide particles and silicon compound particles, more preferably metal oxide particles, and still more preferably titanium oxide particles.

The average particle size of the inorganic particles is, for example, 0.05 um or more and 0.7 um or less. The average particle size is preferably 0.1 um or more and 0.5 um or less, more preferably 0.12 um or more and 0.4 um or less, and still more preferably 0.15 um or more and 0.35 um or less.

The average particle size of inorganic particles is a value as measured in the following manner. Powder is scattered on a sample table so that, as much as possible, individual particles do not overlap each other, and at least 100 particles are observed at a magnification of 10,000 to 30,000 with an ultra-high-resolution field-emission scanning

electron microscope (FE-SEM, S-5200, manufactured by Hitachi High-Tech Corporation) to acquire an observation image. The largest diameter is measured using image analysis software on the observation image, and the measured values are averaged to determine the average particle size.

If the film of the present invention contains inorganic particles, the content of the inorganic particles in the film is, for example, 0.2 mass% or higher and 1.0 mass% or lower, preferably 0.25 mass% or higher and 0.9 mass% or lower, and more preferably 0.3 mass% or higher and 0.8 mass% or lower in an embodiment of the present invention.

In an embodiment, the film of the present invention contains titanium oxide particles as inorganic particles.

The titanium oxide particles are not particularly limited, and examples include particles of titanium dioxide, titanium monoxide, or titanium sesquioxide. Preferable examples of titanium oxide particles include titanium dioxide particles.

Titanium oxide particles are preferred because they are unlikely to decrease the dielectric breakdown strength of films as compared with other inorganic particles such as calcium carbonate and silica or organic particles such as silicone particles. Titanium oxide particles are normally active particles with catalytic activity, but the strength of their activity varies depending on the crystalline morphology. In the present invention, most preferable titanium oxide particles for use are rutile-type titanium oxide, which is unlikely to decrease the dielectric breakdown strength of films.

The average particle size of titanium oxide particles is, for example, 0.05 um or more and 0.7 um or less. The average particle size is preferably 0.1 um or more and 0.5 um or less, more preferably 0.12 um or more and 0.4 um or less, still more preferably 0.15 um or more and 0.35 um or less, and still more preferably 0.15 um or more and 0.25 um or less.

The average particle size of titanium oxide particles is a value measured in the following manner. Powder is scattered on a sample table so that, as much as possible, individual particles do not overlap each other, and at least 100 particles are observed at a magnification of 10,000 to 30,000 with an ultra-high-resolution field-emission scanning electron microscope (FE-SEM, S-5200, manufactured by Hitachi High-Tech Corporation) to acquire an observation image. The largest diameter is measured using image analysis software on the observation image, and the measured values are averaged to determine the average particle size.

The titanium oxide particles may be used singly or in combination of two or more kinds.

If the film of the present invention contains titanium oxide particles, the content of titanium oxide particles in the film of the present invention is, for example, 0.55 mass% or higher and 3 mass% or lower in an embodiment of the present invention. The content of titanium oxide particles is preferably 0.6 mass% or higher and 2.5 mass% or lower, more preferably 0.7 mass% or higher and 2.0 mass% or lower, and still more preferably 0.7 mass% or higher and 1.5 mass% or lower in an embodiment of the present invention from the viewpoint of safety function operability, dielectric breakdown strength, element-winding suitability, film-forming stability, etc.

The film of the present invention preferably contains an antioxidant from the viewpoint of safety function operability, dielectric breakdown strength, element-winding suitability, etc.

Examples of antioxidants include hindered phenol antioxidants, phosphorus antioxidants, amine antioxidants, sulfur antioxidants, and hydrazine antioxidants. Of these antioxidants, hindered phenol antioxidants and phosphorus antioxidants are preferable. In a preferred embodiment of the present invention, the antioxidant preferably contains a hindered phenol antioxidant and a phosphorus antioxidant.

Examples of hindered phenol antioxidants include pentaerythritol tetrakis[3-(3,5-di-tert-butyl-4-hydroxyphenyl)propionate], 1,3,5-tris(3,5-di-tert-butyl-4-hydroxybenzyl)isocyanurate, 2,4,6-tris(4-hydroxy-3,5-di-tert-butylbenzyl)mesitylene, 2,2'-methylenebis(6-tert-butyl-4-methylphenol), 6,6'-thiobis(2-tert-butyl-4-methylphenol), and diethyl 3,5-di-tert-butyl-4-hydroxybenzylphosphonate. In particular, pentaerythritol tetrakis[3-(3,5-di-tert-butyl-4-hydroxyphenyl)propionate] (Irganox (registered trademark) 1010, manufactured by BASF) is preferable.

The phosphorus antioxidant is not particularly limited as long as it is a compound having a phosphorus element. Specific examples include triphenylphosphite, tris(2,4-t-butylphenyl)phosphite, bis[2,4-bis(1,1-dimethylethyl)-6-methylphenyl]ethyl ester phosphite, bis(2,4-t-butylphenyl)pentaerythritol diphosphite, tetrakis(2,4-di-t-butylphenyl) [1,1-biphenyl] -4,4'-diylbisphosphonite, tetra($C_{12-15}$ alkyl)-4,4'-isopropylidenediphenyldiphosphite, 3,9-bis(2,6-t-butyl-4-methylphenoxy)-2,4,8,10-tetraoxa-3,9-diphosphaspiro[5,5 undecane], and 1,1'-biphenyl-4,4'-diylbis[bis(2,4-di-t-butylphenyl)phosphonous acid]. In particular, tris(2,4-t-butylphenyl)phosphite (Irgafos (registered trademark) 168, manufactured by BASF) is preferable.

The antioxidants may be used singly or in combination of two or more.

If the film of the present invention contains an antioxidant, the content of the antioxidant in the film is, for example, 0.01 mass% or higher and lower than 0.5 mass%. The content of the antioxidant is preferably 0.03 mass% or higher and 0.45 mass% or lower, more preferably 0.05 mass% or higher and 0.4 mass% or lower, still more preferably 0.07 mass% or higher and 0.35 mass% or lower, and still more preferably 0.08 mass% or higher and 0.32 mass% or lower from the viewpoint of safety function operability, dielectric breakdown strength, element-winding suitability, etc.

The film of the present invention preferably contains a styrene-based thermoplastic elastomer from the viewpoint of safety function operability, dielectric breakdown strength, element-winding suitability, etc. The film of the present

invention preferably contains a styrene-based thermoplastic elastomer also from the viewpoint of ease of adjusting reduced peak height Spk so as to fall within the range described above, which contributes to safety function operability, dielectric breakdown strength, element-winding suitability, etc.

The styrene-based thermoplastic elastomer is not particularly limited, and known styrene-based thermoplastic elastomers can be used. The addition of a styrene-based thermoplastic elastomer can enhance dielectric breakdown strength at high temperatures and folding resistance. The styrene-based thermoplastic elastomer generally contains a polymer block of a styrene monomer (Hb), which serves as a hard segment, and a conjugated diene compound polymer block or a hydrogenated block thereof (Sb), which serves as a soft segment. The structure of the styrene-based thermoplastic elastomer may be a diblock structure represented by Hb-Sb, a triblock structure represented by Hb-Sb-Hb or Sb-Hb-Sb, a tetrablock structure represented by Hb-Sb-Hb-Sb, or a polyblock structure in which a total of 5 or more Hb and Sb are linearly linked.

The styrene-based monomer used in the polymer block of a styrene monomer (Hb) is not particularly limited, and examples include styrene and derivatives thereof. Specific examples include styrenes, such as styrene, $\alpha$-methylstyrene, 2-methylstyrene, 4-methylstyrene, 4-propylstyrene, 4-t-butylstyrene, 4-cyclohexylstyrene, 4-dodecylstyrene, 2-ethyl-4-benzylstyrene, 4-(phenylbutyl)styrene, 2,4,6-trimethylstyrene, monofluorostyrene, difluorostyrene, monochlorostyrene, dichlorostyrene, methoxystyrene, and t-butoxystyrene; vinyl group-containing aromatic compounds, such as vinylnaphthalenes, including 1-vinylnaphthalene and 2-vinylnaphthalene; and vinylene group-containing aromatic compounds, such as indene and acenaphthylene. Preferred among these is styrene. The styrene-based monomers may be used singly or in combination of two or more.

Further, the conjugated diene compound used in the conjugated diene compound polymer block (Sb) is also not particularly limited. Examples of the conjugated diene compound include butadiene, isoprene, 2,3-dimethylbutadiene, pentadiene, and hexadiene. Preferred among these is butadiene. The conjugated diene compounds may be used singly or in combination of two or more. Further, other comonomers, such as ethylene, propylene, butylene, and styrene, can also be copolymerized. The conjugated diene compound polymer block (Sb) may also be a hydrogenated product that is partially or fully hydrogenated.

Specific examples of styrene-based thermoplastic elastomers include styrene-isoprene diblock copolymers (SI), styrene-butadiene diblock copolymers (SB), styrene-isoprene-styrene triblock copolymers (SIS), styrene-butadiene/isoprene-styrene triblock copolymers (SB/IS), and styrene-butadienestyrene triblock copolymers (SBS), as well as hydrogenated products thereof. Examples of hydrogenated products include styrene-ethylene-butylene-styrene copolymers (SEBS), styrene-ethylene-propylene-styrene copolymers (SEPS), styrene-ethylene-ethylene-propylene-styrene copolymers (SEEPS), and styrene-butylene-butadiene-styrene copolymers (SBBS). Preferred among these are hydrogenated products, and particularly preferred is SEBS.

The content of the unit of the polymer block of a styrene monomer (Hb) in the styrene-based thermoplastic elastomer is, for example, but not limited to, 5 mass% or higher and 80 mass% or lower, preferably 25 mass% or higher and 80 mass% or lower, more preferably 30 mass% or higher and 70 mass% or lower, and even more preferably 35 mass% or higher and 60 mass% or lower.

The content of the conjugated diene compound polymer block and/or the hydrogenated block thereof (Sb) (preferably, ethylene-butylene) in the styrene-based thermoplastic elastomer is not particularly limited, and is, for example, 20 mass% or higher and 95 mass% or lower, preferably 20 mass% or higher and 75 mass% or lower, more preferably 30 mass% or higher and 70 mass% or lower, and even more preferably 40 mass% or higher and 65 mass% or lower.

The melt mass flow rate of the styrene-based thermoplastic elastomer is not particularly limited, and is, for example, 0.5 to 15 g/10 min. The melt mass flow rate is preferably 1 to 10 g/10 min, more preferably 1.5 to 5 g/10 min, and even more preferably 2 to 4 g/10 min. The melt mass flow rate is measured according to JIS K 7210:1999 (condition: 230°C, load: 2.16 kg).

The styrene-based thermoplastic elastomer is available from commercial sources or can be produced according to a known method. Styrene-based thermoplastic elastomers, such as TUFTEC (registered trademark) series (e.g., H1517) produced by Asahi Kasei Corporation, or SEPTON (registered trademark) series (e.g., 8000 series) produced by Kuraray Co., Ltd., can be suitably used.

The styrene-based thermoplastic elastomers can be used singly or in combination of two or more.

If the film of the present invention contains a styrene-based thermoplastic elastomer, the content of the styrene-based thermoplastic elastomer is not particularly limited; however, the content of the elastomer is preferably lower than the content of the syndiotactic polystyrene resin (preferably lower than the content of the syndiotactic polystyrene resin and the content of the polyphenylene ether resin) in the film of the present invention.

If the film of the present invention contains a styrene-based thermoplastic elastomer, the content of the styrene-based thermoplastic elastomer in the film is, for example, 1 mass% or higher and 20 mass% or lower, preferably 2 mass% or higher and 18 mass% or lower, more preferably 3 mass% or higher and 15 mass% or lower, even more preferably 4 mass% or higher and 12 mass% or lower, still more preferably 5 mass% or higher and 9 mass% or lower,

and particularly preferably 5 mass% or higher and 8 mass% or lower.

The film of the present invention may contain, for example, one or more other resins and other additives in addition to the above components.

The other resins are not particularly limited. The film of the present invention preferably contains an atactic polystyrene resin as another resin.

The atactic polystyrene resin is not particularly limited as long as it is an amorphous resin containing polystyrene with an atactic structure as the main chain. In the atactic polystyrene resin, 90% or more, and preferably 95% or more, of the structural units constituting the main chain are preferably styrene and/or styrene having a substituent on the aromatic ring.

The atactic structure refers to a three-dimensional structure in which phenyl groups and substituted phenyl groups (side chains) are randomly arranged with respect to the main chain formed of carbon-carbon bonds. Tacticity is generally quantified according to nuclear magnetic resonance spectroscopy using a carbon isotope ($^{13}C$-NMR spectroscopy) and can be indicated by the proportion of continuous multiple structural units, such as a diad for two units, a triad for three units, and a pentad for five units. The atactic polystyrene resin, for example, in the form of a racemic diad, has a syndiotacticity of, for example, lower than 75%, and preferably 65% or lower. Further, the atactic polystyrene resin, for example, in the form of a racemic pentad, has a syndiotacticity of, for example, lower than 30%, and preferably 25% or lower.

Specific examples of atactic polystyrene resins include polystyrene, poly(alkylstyrene), poly(halogenated styrene), poly(halogenated alkylstyrene), poly(alkoxystyrene), mixtures thereof, and copolymers containing these as main components.

Examples of poly(alkylstyrene) include poly(methylstyrene), poly(ethylstyrene), poly(isopropylstyrene), poly(tertiary butylstyrene), poly(phenylstyrene), poly(vinyl styrene), and poly(vinylnaphthalene). Examples of poly(halogenated styrene) include poly(chlorostyrene), poly(bromostyrene), and poly(fluorostyrene). Examples of poly(halogenated alkylstyrene) include poly(chloromethylstyrene). Examples of poly(alkoxystyrene) include poly(methoxystyrene) and poly(ethoxystyrene).

Particularly preferred atactic polystyrene resins among these are polystyrene, poly(p-methylstyrene), poly(m-methylstyrene), poly(p-tertiary butylstyrene), poly(p-chlorostyrene), poly(m-chlorostyrene), poly(p-fluorostyrene), hydrogenated polystyrene, and styrene-alkylstyrene copolymers, such as a copolymer of styrene and p-methylstyrene.

The melt mass flow rate of the atactic polystyrene resin is not particularly limited, and is, for example, 0.5 to 20 g/10 min. The melt mass flow rate is preferably 2 to 15 g/10 min, more preferably 4 to 12 g/10 min, and even more preferably 6 to 9 g/10 min. The melt mass flow rate is measured according to ISO 1133 (condition: 200°C, load: 5 kgf, test specimen: pellets).

The atactic polystyrene resin is available from commercial sources or can be produced according to a known method. Atactic polystyrene resin available from commercial sources is, for example, a resin generally referred to as "general-purpose polystyrene" (GPPS), such as PSJ-Polystyrene GPPS (HF77, 679, SGP10, etc.) manufactured by PS Japan Corporation.

The atactic polystyrene resins can be used singly or in combination of two or more.

The content of the atactic polystyrene resin is not particularly limited; however, the content of the atactic polystyrene resin is preferably lower than the content of the syndiotactic polystyrene resin (preferably lower than the content of the syndiotactic polystyrene resin and the content of the polyphenylene ether resin) in the film of the present invention.

If the film of the present invention contains an atactic polystyrene resin, the content of the atactic polystyrene resin in the film of the present invention is, for example, 1 mass% or higher and 12 mass% or lower, preferably 2 mass% or higher and 10 mass% or lower, more preferably 3 mass% or higher and 8 mass% or lower, still more preferably 4 mass% or higher and 7 mass% or lower, and even more preferably 5 mass% or higher and 7 mass% or lower.

If the film of the present invention contains a resin other than atactic polystyrene resin, the content of the resin other than the atactic polystyrene resin in the film of the present invention is, for example, 10 mass% or lower, 5 mass% or lower, 1 mass% or lower, 0.5 mass% or lower, or 0.1 mass% or lower.

The other additives are not particularly limited, and examples include components that can be mixed into resin films (in particular, capacitor resin films). Specific examples include chlorine absorbers, lubricants, plasticizers, flame retardants, and colorants. If the film of the present invention contains additives, the content of the additives in the film is, for example, 10 mass% or lower, 5 mass% or lower, 1 mass% or lower, 0.5 mass% or lower, or 0.1 mass% or lower.

The film of the present invention can be produced according to a method including the step of forming a resin composition into a film, and the resin composition contains a syndiotactic polystyrene resin and a polyphenylene ether resin. The content of the syndiotactic polystyrene resin in the resin composition is 50 mass% or higher, and the content of the polyphenylene ether resin in the resin composition is 10 mass% or higher ("the resin composition of the present invention" in the present specification). For example, the resin composition of the present invention is extruded into a film and molded (the film of the present invention thus obtained may be referred to as "unstretched film of the present invention"), and the unstretched film of the present invention is then biaxially stretched (the film of the present invention

thus obtained may be referred to as "biaxially stretched film of the present invention"), thereby obtaining the film of the present invention. The resin composition of the present invention for use preferably further contains inorganic particles.

The composition of the resin composition of the present invention is the same as that of the film of the present invention.

The resin composition of the present invention can be in any form. The resin composition of the present invention is, for example, in a solid form (e.g., aggregates of resin masses of any size, including pellets and powders) or in a liquid form (e.g., a molten mixture of components).

The resin composition of the present invention preferably contains a blend resin obtained by blending some or all of the components in a molten state (including a polymer alloy).

The resin composition of the present invention preferably contains a modified polyphenylene ether as a blend resin containing a polyphenylene ether resin. The modified polyphenylene ether is obtained by melt-kneading (polymer-alloying) a polyphenylene ether resin and another resin. Such a modified polyphenylene ether is preferred because of its excellent melt flowability and extrusion moldability.

Examples of other resins that constitute the modified polyphenylene ether include polystyrene resins, styrene-based thermoplastic elastomers, polypropylene resins, polyphenylene sulfide resins, and polyamide resins. Preferred among these are polystyrene resins (preferably atactic polystyrene resins), styrene-based thermoplastic elastomers, etc.

The compositional ratio of the resins that constitute the modified polyphenylene ether is not particularly limited, and can be appropriately adjusted according to the type of resin. The content of the polyphenylene ether resin in the modified polyphenylene ether is, for example, 40 mass% or higher and 95 mass% or lower, preferably 50 mass% or higher and 90 mass% or lower, more preferably 60 mass% or higher and 85 mass% or lower, still more preferably 65 mass% or higher and 80 mass% or lower, and even more preferably 65 mass% or higher and 75 mass% or lower. The content of other resins in the modified polyphenylene ether is, for example, 5 mass% or higher and 60 mass% or lower, preferably 10 mass% or higher and 50 mass% or lower, more preferably 15 mass% or higher and 40 mass% or lower, still more preferably 20 mass% or higher and 35 mass% or lower, and even more preferably 25 mass% or higher and 35 mass% or lower.

The melt flow rate of the modified polyphenylene ether is not particularly limited. From the viewpoint of extrusion moldability and continuous stretchability, the melt flow rate is preferably 1 to 20 g/10 min, more preferably 1 to 10 g/10 min, and still more preferably 1 to 8 g/10 min. The melt flow rate (MFR) is measured with a melt indexer manufactured by Toyo Seiki Seisaku-sho, Ltd., in accordance with condition M of JIS K 7210. Specifically, first, 4 g of a sample is weighed and inserted into a cylinder kept at a test temperature of 300°C, and preheated under a load of 2.16 kg for 3.5 minutes. Thereafter, the weight of the sample extruded from the bottom hole in 30 seconds is measured, and the MFR (g/10 min) is determined. This measurement is performed three times, and the average is determined to be the measurement value of MFR.

The modified polyphenylene ether is available from commercial sources or can be produced according to a known method. Examples of commercial products preferable for use include Iupiace (registered trademark) series (e.g., Iupiace (registered trademark) AH91) produced by Mitsubishi Engineering-Plastics Corporation, ZYRON (registered trademark) series (e.g., ZYRON (registered trademark) 1000H) produced by Asahi Kasei Corporation, and NORYL (registered trademark) series produced by SHPP Japan LLC.

The modified polyphenylene ethers can be used singly or in combination of two or more.

The content of the modified polyphenylene ether is not particularly limited as long as the ultimate content of each component in the resin composition of the present invention is a predetermined amount. The content of the modified polyphenylene ether in the resin composition of the present invention is, for example, 5 mass% or higher and 50 mass% or lower, preferably 10 mass% or higher and 45 mass% or lower, more preferably 15 mass% or higher and 40 mass% or lower, and still more preferably 20 mass% or higher and 40 mass% or lower.

The resin composition of the present invention preferably contains two or more kinds (preferably two kinds) of modified polyphenylene ethers having different melt flow rates (e.g., modified polyphenylene ether A and modified polyphenylene ether B) from the viewpoints of safety function operability, dielectric breakdown strength, element-winding suitability, etc., or from the viewpoint of ease of adjusting reduced peak height Spk so as to fall within the above range, which contributes to safety function operability, dielectric breakdown strength, element-winding suitability, etc. Thus, the film of the present invention preferably contains a film-like layer of a resin composition containing two or more kinds of modified polyphenylene ethers having different melt flow rates. The film-like layer preferably constitutes at least one surface of the film of the present invention; i.e., the film-like layer is disposed as the outermost layer.

Modified polyphenylene ether A preferably contains a polyphenylene ether resin and a polystyrene resin (preferably an atactic polystyrene resin).

The content of the polyphenylene ether resin in modified polyphenylene ether A is, for example, 40 mass% or higher and 95 mass% lower, preferably 50 mass% or higher and 90 mass% or lower, more preferably 60 mass% or higher and 85 mass% or lower, even more preferably 65 mass% or higher and 80 mass% or lower, and even more preferably 65 mass% or higher and 75 mass% or lower. The content of the polystyrene resin (preferably an atactic

polystyrene resin) in modified polyphenylene ether A is, for example, 5 mass% or higher and 60 mass% or lower, preferably 10 mass% or higher and 50 mass% or lower, more preferably 15 mass% or higher and 40 mass% or lower, even more preferably 20 mass% or higher and 35 mass% or lower, and even more preferably 25 mass% or higher and 35 mass% or lower.

The melt flow rate of modified polyphenylene ether A is preferably 4.5 to 10 g/10 min, more preferably 4.8 to 8 g/10 min, and still more preferably 5 to 7 g/10 min.

The content of modified polyphenylene ether A is not particularly limited as long as the ultimate content of each component in the resin composition of the present invention is a predetermined amount. The content of modified polyphenylene ether A in the resin composition of the present invention is, for example, 3 mass% or higher and 40 mass% or lower, preferably 10 mass% or higher and 35 mass% or lower, more preferably 10 mass% or higher and 30 mass% or lower, and still more preferably 15 mass% or higher and 25 mass% or lower.

Modified polyphenylene ether B preferably contains a polyphenylene ether resin and a styrene-based thermoplastic elastomer.

The content of the polyphenylene ether resin in modified polyphenylene ether B is, for example, 40 mass% or higher and 95 mass% or lower, preferably 50 mass% or higher and 90 mass% or lower, more preferably 60 mass% or higher and 85 mass% or lower, even more preferably 65 mass% or higher and 80 mass% or lower, and even more preferably 65 mass% or higher and 75 mass% or lower. The content of the styrene-based thermoplastic elastomer in modified polyphenylene ether B is, for example, 5 mass% or higher and 60 mass% or lower, preferably 10 mass% or higher and 50 mass% or lower, more preferably 15 mass% or higher and 40 mass% or lower, even more preferably 20 mass% or higher and 35 mass% or lower, and yet even more preferably 25 mass% or higher and 35 mass% or lower.

The melt flow rate of modified polyphenylene ether B is preferably 1 to 4 g/10 min, more preferably 1.2 to 3.5 g/10 min, still more preferably 1.2 to 3 g/10 min, and yet still more preferably 1.3 to 2.5 g/10 min.

The content of modified polyphenylene ether B is not particularly limited as long as the ultimate content of each component in the resin composition of the present invention is a predetermined amount. The content of modified polyphenylene ether B in the resin composition of the present invention is, for example, 2 mass% or higher and 40 mass% or lower, preferably 5 mass% or higher and 30 mass% or lower, more preferably 7 mass% or higher and 20 mass% or lower, and still more preferably 7 mass% or higher and 15 mass% or lower.

The resin composition of the present invention may contain a styrene-based thermoplastic elastomer alone. Preferably, the resin composition contains a blend resin containing a styrene-based thermoplastic elastomer and a syndiotactic polystyrene resin (blend resin Z/X) as a blend resin containing a styrene-based thermoplastic elastomer (which preferably further contains inorganic particles in an embodiment of the present invention). More specifically, the resin composition of the present invention preferably contains a styrene-based thermoplastic elastomer melted together with a syndiotactic polystyrene resin.

The compositional ratio of the resins that constitute blend resin Z/X is not particularly limited, and can be appropriately adjusted according to the type of resin. The content of the syndiotactic polystyrene resin in blend resin Z/X is preferably 60 mass% or higher and 95 mass% or lower, and more preferably 70 mass% or higher and 90 mass% or lower. From the same viewpoint, the content of the styrene-based thermoplastic elastomer in blend resin Z/X is preferably 5 mass% or higher and 40 mass% or lower, and more preferably 10 mass% or higher and 30 mass% or lower.

Blend resin Z/X may be used alone or in combination of two or more.

The content of blend resin Z/X is not particularly limited as long as the ultimate content of each component in the resin composition of the present invention is a predetermined amount. The content of blend resin Z/X in the resin composition of the present invention is, for example, 1 mass% or higher and 30 mass% or lower, preferably 5 mass% or higher and 25 mass% or lower, and more preferably 10 mass% or higher and 20 mass% or lower.

The blend resin can be obtained by melt-kneading each component. For melt kneading, a single-screw melt kneader, a twin-screw melt kneader, or a multi-screw melt kneader with more than two screws can be used. In particular, a twin-screw melt kneader is suitably used due to its greater effect of improving the fragility of the film. For a twin-screw melt kneader, both co-rotation and counter-rotation types can be used; from the viewpoint of preventing resin deterioration, co-rotation is preferred. The ratio of length to diameter (L/D) of the screw is preferably 20 or more, more preferably 25 or more, and even more preferably 28 or more. There is no upper limit on L/D; however, from the viewpoint of preventing resin deterioration, L/D is 100 or less, and preferably 80 or less.

The temperature during melt kneading is preferably 250°C to 350°C, and more preferably 290°C to 330°C, from the viewpoint of the balance between prevention of resin deterioration and dispersibility. During melt kneading, it is preferable to purge the kneader with an inert gas, such as nitrogen, in order to prevent resin deterioration.

The method for extruding the resin composition of the present invention is not particularly limited, and a known extrusion method can be used. For example, the resin composition of the present invention in a solid form supplied into an extruder is melted by heating, filtered through a filter, then extruded through a T-die into a film shape, and brought into contact with a cooling roll set to a predetermined surface temperature for molding by solidification. The unstretched film of the present invention can be prepared as a wound product by molding it into a film shape and then winding it

around a core.

The resin composition of the present invention is preferably mixed before melting. The mixing method is not particularly limited, and is, for example, a method of subjecting multiple kinds of resin masses (pellets etc.) to dry blending with a mixer or a like device.

The resin composition of the present invention is preferably dried before melting. The drying conditions are not particularly limited. The drying temperature is not particularly limited, and is, for example, 70 to 150°C, and preferably 80 to 130°C. The drying time can be appropriately adjusted according to the drying temperature, and is, for example, 2 to 50 hours, and preferably 3 to 20 hours.

The resin composition of the present invention is generally melted using an extruder. Examples of extruders include a single-screw extruder, a twin-screw extruder, and a multi-screw extruder with more than two screws. The type of screw rotation of twin-screw or multi-screw extruders is, for example, co-rotation or counter-rotation. In an embodiment of the present invention, the melting temperature is preferably 280 to 305°C, preferably 280 to 304°C, more preferably 285 to 302°C, still more preferably 290 to 302°C, even still more preferably 295 to 302°C, and particularly preferably 298 to 302°C. In another embodiment of the present invention, the melting temperature is preferably 280 to 300°C, preferably 280 to 299°C, more preferably 280 to 297°C, even more preferably 285 to 297°C, still more preferably 290 to 297°C, and particularly preferably 293 to 297°C. In order to limit degradation of the resin during kneading and mixing, it is preferable to purge the kneader with an inert gas, such as nitrogen.

The filtration accuracy of the filter for filtering the resin composition of the present invention in a molten state is not particularly limited, and is, for example, 2 to 20 um, preferably 3 to 10 μm, and more preferably 3 to 7 μm.

The temperature at the time of extrusion with a T-die is not particularly limited; however, in an embodiment of the present invention, the temperature is preferably 280 to 305°C, preferably 280 to 304°C, more preferably 285 to 302°C, even more preferably 290 to 302°C, still more preferably 295 to 302°C, and particularly preferably 298 to 302°C. Due to such temperatures, the resin can be appropriately dispersed, and the resin can thus contribute to safety function operability, dielectric breakdown strength, element-winding suitability, etc. The temperature at the time of extrusion with a T-die is preferably 280 to 300°C, preferably 280 to 299°C, more preferably 280 to 297°C, still more preferably 285 to 297°C, still more preferably 290 to 297°C, and particularly preferably 293 to 297°C in another embodiment of the invention. Due to such temperatures, the resin can be appropriately dispersed, and so reduced peak height Spk can be easily adjusted so as to fall within the range described above, thereby contributing to safety function operability, dielectric breakdown strength, element-winding suitability, etc.

The adhesion method in solidifying the film-like material extruded from the T-die by contact with a cooling roll is not particularly limited, and examples include air knife, electrostatic pinning, elastic nip rolling, metal nip rolling, and elastic metal nip rolling. In an embodiment of the present invention, the surface temperature of the cooling roll is, for example, but not particularly limited to, 80 to 115°C, and preferably 95 to 105°C. In another embodiment of the present invention, the surface temperature of the cooling roll is, for example, 70 to 110°C, and preferably 80 to 100°C.

The thickness of the unstretched film of the present invention is not particularly limited, and is, for example, 10 to 100 μm, and preferably 20 to 60 μm.

The method for biaxially stretching the unstretched film of the present invention is not particularly limited, and known biaxial stretching methods can be used. For example, the unstretched film of the present invention is heated using a heating roll, stretched in the machine direction (MD), then stretched in the traverse direction (TD) at a predetermined temperature, then heat-fixed at a predetermined temperature, and relaxed in the traverse direction for cooling.

In an embodiment of the present invention, the temperature of the heating roll before stretching in the machine direction is, for example, but not particularly limited to, 100 to 160°C, preferably 120 to 155°C, and more preferably 140 to 150°C. In another embodiment of the present invention, the temperature of the heating roll before stretching in the machine direction is, for example, 100 to 160°C, and preferably 115 to 145°C. In an embodiment of the present invention, the draw ratio in the machine direction is, for example, but not particularly limited to, 1.5-fold to 4.5-fold, and preferably 3.0-fold to 4.0-fold. In another embodiment of the present invention, the draw ratio in the machine direction is, for example, 1.5-fold to 4.5-fold, and preferably 2.5-fold to 4-fold.

The temperature during stretching in the traverse direction is not particularly limited. In an embodiment of the present invention, the temperature during stretching in the traverse direction is, for example, 120 to 180°C, preferably 140 to 170°C, and more preferably 155 to 165°C. In another embodiment of the present invention, the temperature during stretching in the traverse direction is, for example, 120 to 180°C, and preferably 135 to 170°C. In an embodiment of the present invention, the draw ratio in the traverse direction is, for example, but not particularly limited to, 2-fold to 5-fold, and preferably 3.5-fold to 4.5-fold. In another embodiment of the present invention, the draw ratio in the traverse direction is, for example, 2-fold to 5-fold, and preferably 3-fold to 4.5-fold.

The temperature for heat fixation is not particularly limited, and is, for example, 200 to 280°C, and preferably 230 to 260°C. The time for heat fixation is not particularly limited, and is, for example, 5 to 20 seconds.

The temperature during relaxation (relief) in the traverse direction is not particularly limited, and is, for example, 100 to 160°C, and preferably 120 to 140°C. The relaxation (relief) rate in the traverse direction is not particularly limited,

and is, for example, 3 to 7%, and preferably 4 to 6%.

The thickness of the film of the present invention is not particularly limited, and is, for example, 30 um or less, or 20 um or less. The thickness is preferably smaller, from the viewpoint of reducing the volume of the capacitor and increasing capacitance. From this point of view, the thickness is preferably 10 um or less, more preferably 9.5 um or less, even more preferably 8 um or less, still even more preferably 6 um or less, especially preferably 5 um or less, especially even more preferably 4 um or less, and particularly preferably 3 um or less. Further, the thickness is, for example, 1 um or more, preferably 1.5 um or more, more preferably 1.8 um or more, even more preferably 2 μm or more, still even more preferably 2.3 um or more, and particularly preferably 2.5 um or more, from the viewpoint of further enhancing dielectric breakdown strength and slit processing suitability, and further improving continuous film-forming properties. The thickness range of the film of the present invention can be set by freely combining the above upper and lower limits.

The thickness of the films of the present invention, such as the unstretched film of the present invention and the biaxially stretched film of the present invention, is measured using an outer micrometer (High Precision Digimatic Micrometer MDH-25MB, produced by Mitutoyo Corporation) according to Method A of JIS K 7130:1999.

The layer structure of the film of the present invention is not particularly limited. The film of the present invention may be a single layer consisting of one layer, or may be multiple layers having the same or different compositions. The film of the present invention is preferably a film formed of a single or multiple film-like layers of the resin composition of the present invention, and more preferably a single-layer film (a film formed of a single film-like layer of the resin composition of the present invention).

At least one surface of the film of the present invention has a reduced peak height Spk of preferably 0.05 um or more and 0.30 um or less from the viewpoint of safety function operability, dielectric breakdown strength, element-winding suitability, etc. In an embodiment of the present invention, reduced peak height Spk is preferably 0.06 um or more and 0.30 um or less, more preferably 0.07 um or more and 0.25 um or less, still more preferably 0.09 um or more and 0.23 um or less, still more preferably 0.10 um or more and 0.21 um or less, particularly preferably 0.11 um or more and 0.20 um or less, and particularly preferably 0.11 um or more and 0.18 um or less, from the viewpoint of safety function operability, dielectric breakdown strength, element-winding suitability, etc. In another embodiment of the present invention, reduced peak height Spk is preferably 0.06 um or more and 0.30 um or less, more preferably 0.07 um or more and 0.25 um or less, still more preferably 0.10 um or more and 0.23 um or less, still more preferably 0.11 um or more and 0.21 um or less, particularly preferably 0.12 um or more and 0.20 um or less, and particularly preferably 0.12 um or more and 0.18 um or less from the viewpoint of safety function operability, dielectric breakdown strength, element-winding suitability, etc.

Reduced peak height Spk is a value defined by ISO25278-2 and measured in the following manner. For an optical noncontact profilometer, VertScan 2.0 (model: R5500GML, manufactured by Ryoka Systems Inc.) is used. For a sample for measurement, a film is cut to a size of about 20 cm square and set on a measurement table using an electrostatic adhesion plate or a like instrument with creases sufficiently smoothened. First, WAVE mode is used for the measurement. A 530 white filter and a lens barrel of 1 × body are applied, and measurement is performed per field of view (470.92 um × 353.16 μm) with a 10X objective lens. This operation is performed at five points at intervals of 1 cm from the center in the flow direction in both the flow direction and width direction on the surface of the sample on the chill roll side. Subsequently, denoising using a median filter (3 × 3) is performed on the obtained data, and then Gaussian filter processing with a cutoff value of 30 um is performed to remove waviness components. Due to this processing, the roughened surface can be appropriately measured. Next, analysis is performed using ISO parameters in Bearing (a plug-in function of VS-Viewer, which is analysis software of VertScan 2.0) to determine Spk (um), and the average of the values measured at the 10 points is calculated.

From the viewpoint of safety function operability, the film of the present invention preferably has a thermal shrinkage rate measured according to the method described in the Examples of 10% or lower even when measured in the film-forming direction (flow direction) of the film. A thermal shrinkage rate within this range is preferable because of the low likeliness of deterioration of safety function operability caused by tight winding when the film is wound to form a capacitor and used in a high-temperature environment. The thermal shrinkage rate is preferably 8% or lower, more preferably 7% or lower, still more preferably lower than 6.5%, and particularly preferably 6% or lower. The lower limit is preferably 1% or higher, more preferably 2% or higher, and still more preferably 3% or higher, from the viewpoint of limiting the loosening of the film due to heat during vapor deposition. The thermal shrinkage rate in the direction perpendicular to the film-forming direction (width direction) of the film is preferably 0% or higher and 6% or lower, and preferably 1% or higher and 5% or lower.

The thermal shrinkage rate described above can be achieved by controlling the combination of the resins according to the present invention, conditions for film formation, in particular the draw ratio, draw rate, heating temperature after drawing (e.g., heat fixation), relaxation rate in width, etc.

The film of the present invention can provide a capacitor excellent in safety function operability. The safety function operability is measured according to the method of the Examples, described later.

The number of elements that do not undergo short-circuit failure up to a capacitance change rate of -90% is preferably four or more, more preferably five or more, and still more preferably six out of six elements.

In an embodiment of the present invention, the electric potential gradient at a point at which the capacitance change rate has reached -20% is preferably 280 V/um or more, more preferably 310 V/um or more, still more preferably 330 V/um or more, still more preferably 350 V/um or more, particularly preferably 370 V/um or more, more particularly preferably 380 V/um or more, and particularly preferably 390 V/um or more. The upper limit of the electric potential frequency is, for example, but not particularly limited to, 450 V/μm, 430 V/um, 420 V/um, 410 V/um, or 405 V/μm.

In another embodiment of the present invention, the potential gradient at a point at which the capacitance change rate has reached -20% is preferably 280 V/um or more, more preferably 290 V/um or more, still more preferably 300 V/um or more, even more preferably 310 V/um or more, particularly preferably 320 V/um or more, more particularly preferably 330 V/um or more, and yet more particularly preferably 340 V/um or more. The upper limit of the potential frequency is, for example, but not particularly limited to, 400 V/um, 390 V/um, 380 V/μm, 370 V/um, or 360 V/um.

The film of the present invention has a high level of dielectric breakdown strength at high temperatures. The dielectric breakdown strength is measured according to the method of the Examples, described later.

The dielectric breakdown strength of the films of the present invention in a 120°C environment is preferably 480 $V_{DC}$/μm or more, more preferably 490 $V_{DC}$/μm or more, even more preferably 500 $V_{DC}$/μm or more, still even more preferably 510 $V_{DC}$/μm or more, and particularly preferably 520 $V_{DC}$/μm or more.

The dielectric breakdown strength of the films of the present invention in a 150°C environment is preferably 470 $V_{DC}$/μm or more, more preferably 480 $V_{DC}$/μm or more, even more preferably 490 $V_{DC}$/μm or more, still even more preferably 500 $V_{DC}$/μm or more, particularly preferably 510 $V_{DC}$/μm or more, and yet more particularly preferably 520 $V_{DC}$/μm or more.

The upper limit of dielectric breakdown strength at each of the temperatures mentioned above is not particularly limited, and is, for example, 650 $V_{DC}$/μm, 620 $V_{DC}$/μm, 600 $V_{DC}$/μm, 580 $V_{DC}$/μm, or 560 $V_{DC}$/μm.

The film of the present invention has a smaller change in dielectric breakdown strength due to temperature rise.

The ratio of the dielectric breakdown strength in a 150°C environment to the dielectric breakdown strength in a 120°C environment (dielectric breakdown strength in 150°C environment/dielectric breakdown strength in 120°C environment) is preferably 0.92 or more, more preferably 0.94 or more, even more preferably 0.95 or more, still even more preferably 0.96 or more, especially preferably 0.97 or more, and particularly preferably 0.98 or more.

The 120°C environment and the 150°C environment generally differ to a great extent in terms of the load related to dielectric breakdown strength even though they are both a high-temperature environment. The present invention enables the development and/or maintenance of higher dielectric breakdown strength even in an environment with a large load of 150°C.

The upper limit of each of the ratios mentioned above is not particularly limited, and is, for example, 1.1, 1.05, or 1.0.

The film of the present invention has good element-winding suitability. The element-winding suitability is measured according to the method of the Examples, described later. The percentage of the number of rejected products of the total number of produced products is preferably 80% or higher, and more preferably 90% or higher.

The use of the films of the present invention is not particularly limited. The films of the present invention can be used as, for example, heat-resistant films by taking advantage of their heat resistance. Further, the films of the present invention (in particular, the biaxially stretched film of the present invention) can be suitably used as capacitor films that can exhibit their characteristics. In particular, the films of the invention (in particular, the biaxially stretched film of the present invention) are highly suitable for use in compact capacitors, even with a high capacity (e.g., 5 μF or more, preferably 10 μF or more, and even more preferably 20 μF or more), in high-temperature environments.

## 2. Film Integrated with a Metal Layer

In one embodiment, the present invention relates to a film integrated with a metal layer, the film comprising the film of the present invention and a metal layer stacked on one side or both sides of the film of the present invention (which may be referred to herein as the "metal-layer-integrated film of the present invention"). This is described below.

A metal layer (e.g., an electrode) can be attached to one side or both sides of the film of the present invention to process the film into a capacitor. The metal layer to be used is not particularly limited as long as the capacitor targeted by the present invention can be obtained. However, since the capacitor is required to be smaller and lighter, it is preferable to form (stack) an electrode directly on one side or both sides of the film of the present invention to form a film integrated with a metal layer.

Examples of the method for stacking a metal layer on the surface of the film of the present invention include vacuum plating, such as metal vapor deposition or sputtering, coating and drying of a metal-containing paste, and crimping of metal foil or metal powder. In particular, a vacuum deposition method and a sputtering method are preferred in order to meet the further demand for smaller and lighter capacitors, and a vacuum deposition method is preferred

from the viewpoint of productivity, economy, etc. Examples of the vacuum deposition method generally include a crucible method and a wire method; however, the method is not particularly limited as long as the capacitor targeted by the present invention can be obtained, and an optimal method can be appropriately selected.

The metal used in the metal layer can be, for example, an elemental metal, such as zinc, lead, silver, chromium, aluminum, copper, or nickel, or a mixture of two or more of these metals, or an alloy thereof. However, zinc and aluminum are preferred in consideration of environment, economy, capacitor performance, etc.

The film resistance of the metal layer is preferably about 1 to 100 Ω/□ from the viewpoint of the electrical properties of the capacitor. From the viewpoint of self-healing (self-repairing) properties, the film resistance is preferably relatively high within this range, more preferably 5 Ω/□ or more, and even more preferably 10 Ω/□ or more. From the viewpoint of safety as a capacitor, the film resistance is more preferably 50 Ω/□ or less, and even more preferably 30 Ω/□ or less.

When an electrode (metal deposition film) is formed by a vacuum deposition method, the film resistance can be measured during vapor deposition by, for example, four-terminal sensing known by one skilled in the art. The film resistance of the metal deposition film can be adjusted, for example, by adjusting the output of the evaporation source to adjust the amount of evaporation.

When the metal deposition film is formed on one side of the film, a portion of a predetermined width from one edge of the film is not vapor-deposited to form an insulation margin so that the film forms a capacitor when wound. Further, in order to form a tight joint between the metal-layer-integrated film and the metallikon electrode, a heavy edge structure is preferably formed on the other edge, i.e., the edge on the side opposite to the side of the edge having the insulation margin. The film resistance of the heavy edge is typically about 1 to 8 Ω/□, and more preferably about 1 to 5 Ω/□. The thickness of the heavy edge metal film is not particularly limited, but is preferably 1 to 200 nm.

The vapor deposition pattern (margin pattern) of the metal deposition film to be formed is not particularly limited; however, it is preferable to form a fuse as a pattern including a special margin, such as a fishnet pattern or a T-margin pattern, from the viewpoint of improving properties such as protection and safety of the obtained capacitor. Forming a metal deposition film in a vapor deposition pattern including a special margin on at least one side of the film of the present invention is preferable because it is effective, for example, in terms of improving the protection and safety of the resulting capacitor and reducing the breakage and/or short circuit of the capacitor.

The method for forming the margin can be any known method with no restrictions, including, for example, a tape method in which masking is done with tape during vapor deposition and an oil method in which masking is done by applying oil.

On the metal-layer-integrated film of the present invention, a protective layer may be provided for the purpose of physical protection, moisture absorption prevention, oxidation prevention, etc. of the metal deposition film. Silicone oil, fluorine oil, or the like can be preferably used as the protective layer.

The metal-layer-integrated film of the present invention can be processed into the capacitor of the present invention described later. The metal-layer-integrated film of the present invention can be used, for example, as a barrier film for oxygen and other gases.

## 3. Capacitor

In one embodiment, the present invention relates to a capacitor comprising the film of the present invention or the metal-layer-integrated film of the present invention (which may be referred to herein as "the capacitor of the present invention"). This is described below.

In such a capacitor, the film of the present invention can constitute a capacitor as a capacitor dielectric film by, for example, (i) a method using the metal-layer-integrated film, or (ii) stacking the film of the present invention without electrodes, and another conductor (e.g., metal foil, the film of the present invention metallized on one or both sides, or paper and other plastics metallized on one or both sides).

In the step of preparing a capacitor, film winding processing is performed. For example, the metal-layer-integrated film of the present invention comprising a pair of films is stacked one after another so that the metal film and the film of the present invention constituting the metal-layer-integrated film of the present invention are alternately overlaid and further so that the insulation margin of each film is located, one on one side, and the other on the other side, and then wound. In this step, it is preferable to stack the metal-layer-integrated film of the present invention comprising a pair of films with a shift of 1 to 2 mm. The winder to be used is not particularly limited. For example, a 3KAW-N2 automatic winder produced by Kaido Mfg. Co., Ltd., can be used.

The film winding processing is not limited to the above method. Alternatively, for example, the film of the present invention with double-sided vapor deposition (in this case, heavy edges being arranged at opposite ends on the front and back surfaces) and the film of the present invention without vapor deposition (the width being 2 to 3 mm narrower than that of the film of the present invention with double-sided vapor deposition) may be alternately stacked and then wound.

In preparing a flat capacitor, after the winding, the obtained wound product is typically pressed. Pressing helps to tighten the roll of the capacitor and/or to form the element. From the viewpoint of controlling and/or stabilizing the gap between the layers, the applied pressure is 2 to 20 kg/cm$^2$, although the optimum value varies depending on, for example, the thickness of the film of the present invention.

Subsequently, molten metal is sprayed on both edge faces of the wound product to form metallikon electrodes, thereby preparing a capacitor.

The capacitor is further subjected to a predetermined heat treatment. Specifically, the present invention includes the step of performing heat treatment on the capacitor (which may be referred to below as "heat aging"). The heat treatment temperature is, for example, 80 to 190°C, but is not particularly limited thereto. The method of performing the heat treatment on the capacitor may be appropriately selected from known methods including, for example, a method using a constant temperature bath in a vacuum atmosphere, and a method using high frequency induction heating. The time for performing the heat treatment is preferably 1 hour or more, and more preferably 10 hours or more, in terms of obtaining mechanical and thermal stability. In terms of preventing defects in molding such as heat wrinkles and patterning, the time is more preferably 20 hours or less.

Performing the heat treatment can provide the effect of heat aging. Specifically, the gap between the films constituting the capacitor formed from the metal-layer-integrated film of the present invention decreases, thereby suppressing corona discharge and facilitating the crystallization due to the alteration of the internal structure of the metal-layer-integrated film of the present invention. This appears to result in improving the voltage resistance. A temperature of the heat treatment lower than the predetermined temperature cannot sufficiently achieve the effect of the heat aging. On the other hand, a heat treatment temperature higher than the predetermined temperature may cause, for example, pyrolysis or oxidative degradation of the film of the present invention.

Lead wires are typically welded to the metallikon electrodes of a capacitor that has undergone heat aging. The capacitor is preferably encapsulated in a case and potted in epoxy resin to impart weatherability to the capacitor and, in particular, to prevent degradation of the capacitor by moisture.

The capacitor of the present invention using the film of the present invention is suitably used in a high-temperature environment and can be a capacitor that has a small size and a high capacity (e.g., 5 μF or more, preferably 10 μF or more, and even more preferably 20 μF or more). Therefore, the capacitor of the present invention can be used as a high-voltage capacitor, a filter capacitor for various switching power supplies, converters and inverters, a smoothing capacitor, or the like, which are used in electronic devices, electrical devices, etc. Further, the capacitor of the present invention can also be suitably used as an inverter capacitor, a converter capacitor, or the like that controls the drive motor of an electric vehicle or a hybrid vehicle, for which demand is increasing in recent years.

## Examples

The present invention is described in detail below based on Examples; however, the present invention is not limited by these Examples.

### (1) Measurement Methods

Various measurement methods are as described below.

### (1-1) Measurement of Average Particle Size

The average particle size of inorganic particles (titanium oxide ($TiO_2$), silica, and spherical silicone) was measured in the following manner. A powder was scattered on a sample stage so that individual particles overlapped as little as possible. Using an ultra-high-resolution field emission scanning electron microscope (S-5200 FE-SEM, produced by Hitachi High-Technologies Corporation), at least 100 particles were observed at a magnification of 10,000x to 30,000x to obtain observation images. The longest diameter was measured from the observation images by using image analysis software. The average particle size was obtained by averaging the measured values.

### (1-2) Measurement of Melt Flow Rate

The melt flow rate (MFR) of each resin in the form of a raw material resin pellet was measured using a melt indexer produced by Toyo Seiki Co., Ltd., in accordance with condition M of JIS K 7210. Specifically, first, a sample weighing 4 g was inserted into a cylinder having a test temperature of 300°C and preheated under a load of 2.16 kg for 3.5 minutes. The weight of the sample extruded from the bottom hole for 30 seconds was then measured to obtain the MFR (g/10 min). This measurement was repeated 3 times, and the average was used as the measured MFR.

(1-3) Measurement and Calculation of Content of Each Component in Biaxially Stretched Film

The content of each component in the biaxially stretched films of the Examples and Comparative Examples was calculated from the component content of each raw material used, if known, and the mixing ratio of the raw materials. When a blend resin with an unknown component content and/or a modified polyphenylene ether with an unknown component content was used as raw materials, the content of each component in the biaxially stretched films was calculated from the content of each component in the raw materials measured by the following method, and the mixing ratio of the raw materials. If the content ratio of raw materials was unknown, the content of each component in the biaxially stretched films was measured by the following method.

Raw materials or biaxially stretched films were dissolved in 1,1,2,2-tetrachloroethane-$d_2$ to prepare samples for measurements, and $^1$H-NMR and $^{13}$C-NMR measurements were performed. The conditions of the $^1$H-NMR and $^{13}$C-NMR measurements are shown below.

In the $^{13}$C-NMR measurement, the contained components were identified from the measured signals. The integrated intensity ratio (molar ratio) per H atom of each contained component was then determined from the signals measured by the $^1$H-NMR measurement and converted into weight ratio by the formula weight of each component to determine the content of the polyphenylene ether, styrene, and ethylene-butylene components.

The content of the polyphenylene ether resin in the biaxially stretched film is equal to the content of the polyphenylene ether component as determined above.

$^1$H-NMR measurement

Measurement device: AVANCE III-600 with Cryo Probe, produced by Bruker BioSpin
Measurement frequency: 600 MHz
Measurement solvent: 1,1,2,2-tetrachloroethane-$d_2$
Measurement temperature: 300 K
Chemical shift standard: 1,1,2,2-tetrachloroethane-$d_2$ ($^1$H; 6.00 ppm)

$^{13}$C-NMR measurement

Measurement device: AVANCE III-600 with Cryo Probe, produced by Bruker BioSpin
Measurement frequency: 150 MHz
Measurement solvent: 1,1,2,2-tetrachloroethane-$d_2$
Measurement temperature: 300 K
Chemical shift standard: 1,1,2,2-tetrachloroethane-$d_2$ ($^{13}$C; 73.78 ppm)

(1-4) Measurement of Ethylene-Butylene Content of SEES

The ethylene-butylene content of a SEBS-type hydrogenated styrene-based thermoplastic elastomer, which was the resin used in the Examples and Comparative Examples, was measured as follows. SEES dissolved in heavy chloroform ($CDCl_3$) was used as a sample for measurement, and $^1$H-NMR measurements were performed under the following conditions. The ethylene-butylene content was determined by identifying the contained components from the measured signals, determining the integrated intensity ratio (molar ratio) per H atom of each contained component, and converting the integrated intensity ratio to weight ratio according to the formula weight of each component.

$^1$H-NMR measurement

Measurement device: AVANCE III-600 with Cryo Probe, produced by Bruker BioSpin
Measurement frequency: 600 MHz
Measurement solvent: $CDCl_3$
Measurement temperature: 300 K
Chemical shift standard: $CDCL_3$ ($^1$H; 7.25 ppm)

(2) Production of Resin Composition and Film

(2-1) Resins Used etc.

- (A) Syndiotactic polystyrene resin (sPS)
  A1: XAREC (registered trademark) 90ZC, produced by Idemitsu Kosan Co., Ltd.
- (B) Polyphenylene ether resin (PPE)

  B1: Iupiace (registered trademark) PX100F, produced by Mitsubishi Engineering-Plastics Corporation
  B2: Iupiace (registered trademark) PX100L, produced by Mitsubishi Engineering-Plastics Corporation

- (C) SEBS-type hydrogenated styrene-based thermoplastic elastomer
  C1: TUFTEC (registered trademark) H1517 (ethylene-butylene content = 57%), produced by Asahi Kasei Corporation
- (D) Atactic polystyrene (aPS)
  D1: HF77, produced by PS Japan Corporation
- (E) Titanium oxide (titanium dioxide: $TiO_2$)

  E1: PT-501R, produced by Ishihara Sangyo Kaisha, Ltd.
  E2: PT-401L, produced by Ishihara Sangyo Kaisha, Ltd.
  E3: R-38L, produced by Sakai Chemical Industry Co., Ltd.

- (F) Silica

  F1: SEAHOSTAR (registered trademark) KE P50, produced by Nippon Shokubai Co., Ltd.
  F2: SEAHOSTAR (registered trademark) KE P30, produced by Nippon Shokubai Co., Ltd.
  F3: SEAHOSTAR (registered trademark) KE P100, produced by Nippon Shokubai Co., Ltd.

- (G) Spherical silicone
  G1: Tospearl 120FL (registered trademark), produced by Momentive Performance Materials Inc.
- (H) Antioxidant

  H1: Irganox (registered trademark) 1010 (hindered phenol antioxidant)
  H2: Irgafos (registered trademark) 168 (phosphorus antioxidants), produced by BASF Japan Ltd.

(2-2) Blend Resins

- Modified polyphenylene ether resin 1 (m-PPE1)

B1 and D1 were mixed, and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 320°C at a rotational speed of 100 rpm and extruded through a strand die. The strand was cooled with water, and then cut into pellets, thereby obtaining m-PPE1. The MFR under a load of 2.16 kg at 300°C was 5.7 g/10 min.

- Modified polyphenylene ether resin 2 (m-PPE2)

B2 and C1 were mixed, and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 320°C at a rotational speed of 100 rpm and extruded through a strand die. The strand was cooled with water, and then cut into pellets, thereby obtaining m-PPE2. The MFR under a load of 2.16 kg at 300°C was 1.8 g/10 min.

- Modified polyphenylene ether resin 3 (m-PPE3)

B2 and D1 were mixed, and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 320°C at a rotational speed of 100 rpm and extruded through a strand die. The strand was cooled with water, and then cut into pellets, thereby obtaining m-PPE1. The MFR under a load of 2.16 kg at 300°C was 3.1 g/10 min.

- Particle-containing blend resin 1 (Z1)

A1, C1, E1, H1, and H2 were mixed by appropriately changing the mixing ratio (the mass ratio of H1 to H2 was 1:2) to obtain multiple mixtures that were different from each other in terms of mixing ratio of components. Each mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Z1.

- Particle-containing blend resin 2 (Z2)

A1, C1, E2, H1, and H2 were mixed (the mass ratio of H1 and H2 was 1:2) and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Z2.

- Particle-containing blend resin 3 (Z3)

A1, C1, E3, H1, and H2 were mixed (the mass ratio of H1 to H2 was 1:2) and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Z3.

- Particle-containing blend resin 4 (Z4)

A1, B2, G1, and H1 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Z4.

- Particle-containing blend resin 5 (Z5)

A1, F3, and H1 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Z5.

- SEES-containing blend resin (Y)

A1 and C1 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining Y.

- Particle-containing blend resin 1 (X1)

A1, C1, and E1 were mixed in such a manner that the mixing ratio was changed appropriately to obtain mixtures of components at different mixing ratios. Each mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X1.

- Particle-containing blend resin 2 (X2)

A1, C1, and E2 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X2.

- Particle-containing blend resin 3 (X3)

A1, C1, and E3 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X3.

- Particle-containing blend resin 4 (X4)

A1, C1, and F1 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X4.

- Particle-containing blend resin 5 (X5)

A1, C1, and F3 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X5.

- Particle-containing blend resin 6 (X6)

A1, B2, and G1 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X6.

- Particle-containing blend resin 7 (X7)

A1 and F2 were mixed and the mixture was supplied into a twin-screw melt kneader (2D30W2, produced by Toyo Seiki Seisaku-sho, Ltd.; LID = 30) together with nitrogen gas. The mixture was melt-kneaded at a cylinder temperature of 300°C at a rotational speed of 100 rpm and extruded through a strand die. The strand was cooled with water, and then cut into pellets, thereby obtaining X7.

(2-3) Method for Producing Resin Composition and Film

Example 1A

Production of Unstretched Film

A resin composition obtained by mixing A1, m-PPE1, m-PPE2, and Z1 so that the content of each component was as shown in Table 3 was supplied into a pellet dryer and dried at 120°C for 5 hours. The dried raw material was supplied into a single-screw film-making machine (GM-50, produced by GM Engineering Co., Ltd.) together with nitrogen gas. The raw material was melted at a cylinder temperature of 300°C and then filtered through a filter with a filtration accuracy of 5 um, and the temperature was adjusted to 300°C, followed by extrusion through a T-die at 300°C. The molten resin was solidified by contact with a mirror-surface metal roll (cooling roll) with a surface temperature of 100°C by electrostatic adhesion, and molded into a film, thereby obtaining an unstretched film. The thickness of the unstretched film was about 40 um; however, the extrusion amount and take-up speed were fine-tuned so that the thickness after stretching was the target value.

Production of Stretched Film

The unstretched film was introduced into a roll-type longitudinal stretching machine, heated with a roll at 145°C, and stretched by a factor of 3.5 in the machine direction (MD). Subsequently, the film was introduced into a tenter and stretched by a factor of 3.9 in the traverse direction (TD) in an oven in which the temperature of the stretching zone was 158°C. Subsequently, the film was heat-fixed in the oven at 240°C and 5% relaxed in the traverse direction in the oven at 130°C. The end of the film coming out of the tenter was slit and wound up, thereby obtaining a biaxially stretched film

roll. The extrusion amount and take-up speed were fine-tuned so that the thickness of the film was 2.9 um.

Example 2A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 3A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 4A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 5A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 6A

An unstretched film and a biaxially stretched film with a thickness of 2.9 um were obtained in the same manner as in Example 1A, except that a resin composition obtained by mixing A1, m-PPE1, m-PPE2, and Z2 so that the content of each component was as shown in Table 3 was used, and the film-forming conditions were as shown in Table 1.

Example 7A

An unstretched film and a biaxially stretched film with a thickness of 2.9 um were obtained in the same manner as in Example 1A, except that a resin composition obtained by mixing A1, m-PPE1, m-PPE2, and Z3 so that the content of each component was as shown in Table 3 was used, and the film-forming conditions were as shown in Table 1.

Example 8A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 9A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Example 10A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3, and the film-forming conditions were as shown in Table 1.

Example 11A

An unstretched film and a biaxially stretched film with a thickness of 2.9 um were obtained in the same manner as in Example 1A, except that a resin composition obtained by mixing A1, m-PPE1, m-PPE2, and Z1 so that the content of each component was as shown in Table 3 was used, and the film-forming conditions were as shown in Table 1.

Comparative Example 1A

An unstretched film and a biaxially stretched film with a thickness of 2.9 um were obtained in the same manner as in Example 1A, except that Z4 was used as the resin composition and the film-forming conditions were as shown in Table 1.

Comparative Example 2A

An unstretched film and a biaxially stretched film with a thickness of 2.9 um were obtained in the same manner as in Example 1A, except that Z5 was used as the resin composition and the film-forming conditions were as shown in Table 1.

Comparative Example 3A

An unstretched film and a biaxially stretched film with a thickness of 2.9 um were obtained in the same manner as in Example 1A, except that a resin composition obtained by mixing A1, m-PPE1, and Y so that the content of each component was as shown in Table 3 was used, and the film-forming conditions were as shown in Table 1.

Example 1B

Production of Unstretched Film

A resin composition obtained by mixing A1, m-PPE1, m-PPE2, and X1 so that the content of each component was as shown in Table 2 was supplied into in a pellet dryer and dried at 120°C for 5 hours. The dried raw material was supplied into a single-screw film-making machine (GM-50, produced by GM Engineering Co., Ltd.) together with nitrogen gas. The raw material was melted at a cylinder temperature of 290°C and then filtered through a filter with a filtration accuracy of 5 um, and the temperature was adjusted to 290°C, followed by extrusion through a T-die at 290°C. The molten resin was solidified by contact with a mirror-surface metal roll (cooling roll) with a surface temperature of 90°C by electrostatic adhesion, and molded into a film, thereby obtaining an unstretched film. The thickness of the unstretched film was about 35 um; however, the extrusion amount and take-up speed were fine-tuned so that the thickness after stretching was the target value.

Production of Stretched Film

The unstretched film was introduced into a roll-type longitudinal stretching machine, heated with a roll at 130°C, and stretched by a factor of 3.2 in the machine direction (MD). Subsequently, the film was introduced into a tenter and stretched by a factor of 3.6 in the traverse direction (TD) in an oven in which the temperature of the stretching zone was 150°C. Subsequently, the film was heat-fixed in the oven at 240°C and 5% relaxed in the traverse direction in the oven at 130°C. The end of the film coming out of the tenter was slit and wound up, thereby obtaining a biaxially stretched film roll. The extrusion amount and take-up speed were fine-tuned so that the thickness of the film was 2.9 um.

Example 2B

An unstretched film and a biaxially stretched film with a thickness of 2.9 um were obtained in the same manner as in Example 1B, except that a resin composition obtained by mixing A1, m-PPE1, m-PPE2, and X1 so that the content of each component was as shown in Table 2 was used, and the film-forming conditions were as shown in Table 1.

Example 3B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and film-forming conditions were as shown in Table 1.

Example 4B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and film-forming conditions were as shown in Table 1.

Example 5B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and film-forming conditions were as shown in Table 1.

Example 6B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and the film-forming conditions were as shown in Table 1.

Example 7B

An unstretched film and a biaxially stretched film having a thickness of 2.9 um were obtained in the same manner as in Example 1B, except that a resin composition obtained by mixing A1, m-PPE1, m-PPE2, and X2 so that the content of each component was as shown in Table 2 was used, and the film-forming conditions were as shown in Table 1.

Example 8B

An unstretched film and a biaxially stretched film having a thickness of 2.9 um were obtained in the same manner as in Example 1B, except that a resin composition obtained by mixing A1, m-PPE1, m-PPE2, and X3 so that the content of each component was as shown in Table 2 was used, and the film-forming conditions were as shown in Table 1.

Example 9B

An unstretched film and a biaxially stretched film having a thickness of 2.9 um were obtained in the same manner as in Example 1B, except that a resin composition obtained by mixing A1, m-PPE1, m-PPE2, and X4 so that the content of each component was as shown in Table 2 was used, and the film-forming conditions were as shown in Table 1.

Example 10B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and the film-forming conditions were as shown in Table 1.

Example 11B

An unstretched film and a biaxially stretched film having a thickness of 2.9 um were obtained in the same manner as in Example 1B, except that a resin composition obtained by mixing A1, m-PPE1, m-PPE2, and X1 so that the content of each component was as shown in Table 2 was used, and the film-forming conditions were as shown in Table 1.

Example 12B

An unstretched film and a biaxially stretched film having a thickness of 2.9 um were obtained in the same manner as in Example 1B, except that a resin composition obtained by mixing A1, m-PPE2, and X1 so that the content

of each component was as shown in Table 2 was used, and the film-forming conditions were as shown in Table 1.

Example 13B

An unstretched film and a biaxially stretched film having a thickness of 2.9 um were obtained in the same manner as in Example 1B, except that a resin composition obtained by mixing A1, m-PPE1, m-PPE3, and X1 so that the content of each component was as shown in Table 2 was used, and the film-forming conditions were as shown in Table 1.

Example 14B

An unstretched film and a biaxially stretched film having a thickness of 2.9 um were obtained in the same manner as in Example 1B, except that a resin composition obtained by mixing A1, m-PPE1, m-PPE3, and X1 so that the content of each component was as shown in Table 2 was used, and the film-forming conditions were as shown in Table 1.

Comparative Example 1B

A biaxially stretched film having a thickness of 2.9 um was obtained in the same manner as in Example 1B except that X6 was used as the resin composition, and the film-forming conditions used were as shown in Table 1.

Comparative Example 2B

An unstretched film and a biaxially stretched film with a thickness of 2.9 um were obtained in the same manner as in Example 1B, except that X7 was used as the resin composition, and the film-forming conditions used were as shown in Table 1.

Comparative Example 3B

An unstretched film and a biaxially stretched film with a thickness of 2.9 um were obtained in the same manner as in Example 1B, except that a resin composition obtained by mixing A1, m-PPE1, and C1 so that the content of each component was as shown in Table 2 was used, and the film-forming conditions were as shown in Table 1.

Comparative Example 4B

An unstretched film and a biaxially stretched film with a thickness of 2.9 um were obtained in the same manner as in Example 1B, except that a resin composition obtained by mixing A1, m-PPE1, and X1 so that the content of each component was as shown in Table 2 was used, and the film-forming conditions were as shown in Table 1.

Comparative Example 5B

An unstretched film and a biaxially stretched film with a thickness of 2.9 um were obtained in the same manner as in Example 1B, except that a resin composition obtained by mixing A1, m-PPE1, m-PPE2, and X1 so that the content of each component was as shown in Table 1 was used, and the film-forming conditions were as shown in Table 1.

Comparative Example 6B

An unstretched film and a biaxially stretched film with a thickness of 2.9 um were obtained in the same manner as in Example 1B, except that a resin composition obtained by mixing A1, m-PPE1, m-PPE2, and X5 so that the content of each component was as shown in Table 1 was used, and the film-forming conditions were as shown in Table 1.

Comparative Example 7B

An unstretched film and a biaxially stretched film with a thickness of 2.9 um were obtained in the same manner as in Example 1B, except that a resin composition obtained by mixing A1, m-PPE1, m-PPE2, and X1 so that the content of each component was as shown in Table 2 was used, and the film-forming conditions were as shown in Table 1.

Table 1

| Film-forming conditions | Film-forming conditions | | | | | | | | | |
|---|---|---|---|---|---|---|---|---|---|---|
| | Extrusion temperature | Cast temperature | Longitudinal stretching temperature | Longitudinal stretch ratio | Transverse stretching temperature | Transverse stretch ratio | Heat fixation temperature | Heat fixation time | Cooling temperature | Cooling relaxation rate |
| | °C | °C | °C | folds | °C | folds | °C | sec. | °C | % |
| Example 1A | 300 | 100 | 145 | 3.3 | 158 | 3.9 | 240 | 10 | 130 | 5% |
| Example 2A | 300 | 100 | 145 | 3.3 | 158 | 3.9 | 240 | 10 | 130 | 5% |
| Example 3A | 300 | 100 | 145 | 3.3 | 158 | 3.9 | 240 | 10 | 130 | 5% |
| Example 4A | 300 | 100 | 145 | 3.3 | 158 | 3.9 | 240 | 10 | 130 | 5% |
| Example 5A | 300 | 100 | 145 | 3.3 | 158 | 3.9 | 240 | 10 | 130 | 5% |
| Example 6A | 300 | 100 | 145 | 3.3 | 158 | 3.9 | 240 | 10 | 130 | 5% |
| Example 7A | 300 | 100 | 145 | 3.3 | 158 | 3.9 | 240 | 10 | 130 | 5% |
| Example 8A | 300 | 100 | 145 | 3.3 | 158 | 3.9 | 240 | 10 | 130 | 5% |
| Example 9A | 300 | 100 | 145 | 3.3 | 158 | 3.9 | 240 | 10 | 130 | 5% |
| Example 10A | 300 | 100 | 145 | 3.3 | 158 | 3.9 | 240 | 10 | 130 | 5% |
| Example 11A | 300 | 100 | 145 | 3.3 | 158 | 3.9 | 240 | 10 | 130 | 5% |
| Comparative Example 1A | 290 | 50 | 140 | 3.1 | 145 | 3.4 | 240 | 10 | 180 | 4% |
| Comparative Example 2A | 290 | 20 | 114 | 3.2 | 119 | 3.3 | 235 | 10 | 180 | 4% |
| Comparative Example 3A | 300 | 60 | 135 | 3.0 | 150 | 3.5 | 240 | 10 | 130 | 3% |

Table 2

| | Film-forming conditions | | | | | | | | | |
|---|---|---|---|---|---|---|---|---|---|---|
| | Extrusion Temperature | Cast temperature | Longitudinal stretching temperature | Longitudinal stretch ratio | Transverse stretching temperature | Transverse stretching ratio | Heat fixation temperature | Heat fixation time | Cooling temperature | Cooling relaxation rate |
| | °C | °C | °C | folds | °C | folds | °C | sec. | °C | % |
| Example 1B | 290 | 90 | 130 | 3.2 | 150 | 3.6 | 240 | 10 | 130 | 5% |
| Example 2B | 290 | 90 | 130 | 3.2 | 150 | 3.6 | 240 | 10 | 130 | 5% |
| Example 3B | 295 | 90 | 135 | 3.2 | 158 | 3.6 | 240 | 10 | 130 | 5% |
| Example 4B | 295 | 90 | 135 | 3.2 | 158 | 3.6 | 240 | 10 | 130 | 5% |
| Example 5B | 295 | 90 | 135 | 3.2 | 158 | 3.6 | 240 | 10 | 130 | 5% |
| Example 6B | 295 | 90 | 135 | 3.2 | 158 | 3.6 | 240 | 10 | 130 | 5% |
| Example 7B | 295 | 90 | 135 | 3.2 | 158 | 3.6 | 240 | 10 | 130 | 5% |
| Example 8B | 295 | 90 | 135 | 3.2 | 158 | 3.6 | 240 | 10 | 130 | 5% |
| Example 9B | 295 | 90 | 135 | 3.2 | 158 | 3.6 | 240 | 10 | 130 | 5% |
| Example 10B | 295 | 90 | 135 | 3.2 | 158 | 3.6 | 240 | 10 | 130 | 5% |
| Example 11B | 295 | 90 | 145 | 3.2 | 158 | 3.6 | 240 | 10 | 130 | 5% |
| Example 12B | 295 | 90 | 135 | 3.2 | 158 | 3.6 | 240 | 10 | 130 | 5% |
| Example 13B | 299 | 90 | 148 | 3.2 | 160 | 3.6 | 240 | 10 | 130 | 5% |
| Example 14B | 295 | 90 | 135 | 3.2 | 158 | 3.6 | 240 | 10 | 130 | 5% |
| Comparative Example 1B | 290 | 50 | 135 | 3.2 | 158 | 3.6 | 240 | 10 | 130 | 5% |
| Comparative Example 2B | 290 | 50 | 115 | 3.2 | 125 | 3.6 | 240 | 10 | 130 | 5% |
| Comparative Example 3B | 295 | 60 | 135 | 3.2 | 158 | 3.6 | 240 | 10 | 130 | 5% |
| Comparative Example 4B | 295 | 90 | 135 | 3.2 | 158 | 3.6 | 240 | 10 | 130 | 5% |

(continued)

| | Film-forming conditions | | | | | | | | | |
|---|---|---|---|---|---|---|---|---|---|---|
| | Extrusion Temperature | Cast temperature | Longitudinal stretching temperature | Longitudinal stretch ratio | Transverse stretching temperature | Transverse stretching ratio | Heat fixation temperature | Heat fixation time | Cooling temperature | Cooling relaxation rate |
| | °C | °C | °C | folds | °C | folds | °C | sec. | °C | % |
| Comparative Example 5B | 310 | 100 | 155 | 3.2 | Break in the heat fixation zone | | | | | |
| Comparative Example 6B | 295 | 90 | 135 | 3.2 | 158 | 3.6 | 240 | 10 | 130 | 5% |
| Comparative Example 7B | 300 | 90 | 135 | 3.2 | 158 | 3.6 | 240 | 10 | 130 | 5% |

(3) Measurement and Evaluation of Film-forming Properties and Film Properties

(3-1) Evaluation of Film-forming stability

The film-forming stability was evaluated according to the following criteria based on the length of film that can be formed without breaking when biaxially stretched film is formed under the conditions described in each of the Examples and Comparative Examples.

A: The length of the formed film was 2000 m or more.
B: The length of the formed film was 1000 m or more and less than 2000 m.
C: The length of the formed film was 500 m or more and less than 1000 m.
D: The length of the formed film was less than 500 m.

(3-2) Measurement of Dielectric Breakdown Strength at High Temperature

The dielectric breakdown strength at a high temperature of the biaxially stretched film obtained in each of the Examples and Comparative Examples was evaluated in the following manner. A measuring device corresponding to the device described in JIS C2151 (2006) 17.2.2 (plate electrode method) was prepared. However, the prepared measuring device was different from the device of JIS C2151 in that conductive rubber (E12S10, produced by Seiwa Electric MFG Co., Ltd.) was used as the lower electrode in place of the elastic material described in JIS C2151 (2006) 17.2.2 and aluminum foil was not wound around the lower electrode. The measurement environment was set in a forced circulation oven at a set temperature of 120°C or 150°C, and the electrode and film were used after being heated for 30 minutes in the oven. The voltage was increased from 0 V at a rate of 100 V/sec, and the time when the current value exceeded 5 mA was defined as the breaking time. The dielectric breakdown voltage of each film was measured 20 times. The dielectric breakdown voltage $V_{DC}$ was divided by the film thickness (um), and the average value of 16 points, excluding the upper 2 points and the lower 2 points in the 20 measurement results, was taken as the dielectric breakdown strength ($V_{DC}/\mu m$).

(3-3) Measurement of Reduced Peak Height Spk

The reduced peak height Spk of the biaxially stretched films obtained in the Examples and Comparative Examples was measured in the following manner.

As an optical interference non-contact surface shape measuring instrument, VertScan 2.0 (model: R5500GML) produced by Ryoka Systems Inc. was used. As a sample for measurement, each film was cut out into an arbitrary size of about 20-cm square and set on a measurement stage using an electrostatic adhesion plate or the like, with the wrinkles fully stretched out.

For the measurement, first, the WAVE mode was used and a 530 white filter and a 1×BODY lens barrel were applied. A 10× objective lens was used to measure an area of 470.92 um × 353.16 um per field of view. This operation was performed at 5 locations at intervals of 1 cm in a machine direction from the point that is at the center in both the machine direction and the traverse direction on the surface of the target sample at the chill roll side.

Subsequently, the obtained data were subjected to noise cancellation processing by a median filter (3 × 3), and Gaussian filtering with a cutoff value of 30 um was then performed to remove waviness components. The roughened surface was thereby brought into a state suitable for proper measurement.

Subsequently, analysis was performed using the ISO parameter in the plug-in function "bearing" of the analysis software VS-Viewer of VertScan 2.0 to determine Spk (um). The average of each value obtained at the 10 locations was calculated.

(3-4) Measurement of Heat Shrinkage Rate

A gauge line with a length of 10 cm was drawn on a strip-shaped film (2 cm × 15 cm with the measurement direction as the long side). After hanging the strip-shaped film in a hot-air oven at 200°C for 10 minutes, the film was taken out from the oven and allowed to cool to room temperature (23°C). The length of the gauge line after the treatment was measured, and the heat shrinkage rate (in the longitudinal direction and the traverse direction) of the film was obtained. Three of each film were measured, and the heat shrinkage rate was calculated by averaging the shrinkage rate calculated by the following formula:

$$(\text{Length of gauge line after treatment} - \text{Length of gauge line before treatment})/\text{Length of gauge line before treatment (unit: \%)}$$

(4) Measurement and Evaluation of Capacitor Characteristics

(4-1) Preparation of Capacitor

Capacitors were produced in the following manner using the biaxially stretched films obtained in the Examples and Comparative Examples. A special deposition pattern margin and an insulation margin were formed on each biaxially stretched film to impart capacitor protection and safety to the film, and aluminum deposition was applied so that the metal film had a surface resistivity of 20Ω/□, thereby obtaining a film integrated with a metal layer. Subsequently, after the metal-layer-integrated film was slit to a width of 30 mm, two sheets of the metal-layer-integrated film were combined and wound using a 3KAW-N2-60/83 automatic winder (produced by Kaido Mfg. Co., Ltd.) while setting the number of turns so that an element capacitance of 10 μF was achieved. The wound element was subjected to press processing and flattened. Then, while the press load was applied, molten zinc metal was sprayed on the element end face to form an electrode extraction portion followed by heat treatment at 120°C for 15 hours for thermal curing. After the thermal curing, leads were soldered to the element end face and sealed with epoxy resin to obtain a flat film capacitor.

(4-2) Evaluation of End Face Misalignment of Capacitor Element

After films integrated with a metal layer were obtained in the same manner as above in (4-1) using the biaxially stretched films obtained in the Examples and Comparative Examples and slit to a width of 30 mm, two sheets of each metal-layer-integrated film were combined and wound by using a 3KAW-N2-60/83 automatic winder (produced by Kaido Mfg. Co., Ltd.). During the winding, the two sheets of the film were visually observed from the start to the end of winding. Those with a misalignment of the end face were rejected, and the ratio of the number of not rejected products to the total number of products obtained (30 to 50) was expressed as a percentage and used as an indicator of end face misalignment. 90% or more was evaluated as "A", 80% or more and less than 90% was evaluated as "B", 70% or more and less than 80% was evaluated as "C", and less than 70% was evaluated as "D."

(4-3) Stepwise Increasing Voltage Test

After the capacitor obtained above in (4-1) was preheated beforehand at 120°C for 1 hour, capacitance was evaluated with an LCR Hi-Tester 3522-50 (prchduced by Hioki E.E. Corporation) (initial capacitance). Next, a direct-current voltage of 290 V was applied to the capacitor in a constant-temperature chamber at 120°C for 1 hour. The capacitance of the capacitor after voltage application was measured in the same manner, and the change in capacitance before and after the test was calculated.

$$\text{Capacitance change rate} = (\text{Capacitance after voltage application} - \text{Initial capacitance}) / \text{Initial capacitance} \times 100\ (\%)$$

Subsequently, the capacitor was returned to the constant temperature chamber and the voltage applied was increased stepwise by 50 V, and the capacitance change rate was measured. This operation was repeated. The test was carried out using six capacitors, and evaluation was made based on the number of capacitors whose capacitance change rate had reached -90% or less. Capacitors in which a short-circuit failure occurred and insulation was not maintained before the capacitance change rate had reached -90% or less were regarded as defective and were not subjected to the subsequent tests.

The occurrence of short-circuit failure is determined based on whether the resistance of the capacitor has reached 10 kO or less. A DSM-8104 super megohmmeter produced by Hioki E.E. Corporation was used as the measuring device. The upper limit of the current measurement range of this device is 10 mA. When the current value at an applied voltage of 100 V exceeded the upper limit of the measurement range, the resistance value of the capacitor was regarded as 10 kQ or less.

(4-4) Measurement of Potential Gradient When the Capacitance Change Rate Has Reached -20%

In the stepwise increasing voltage test, the voltage at which the capacitance change rate reached -20% or less for the first time was divided by the thickness (um) of the film, and the average of the six capacitors was taken as the potential gradient at which the capacitance change rate had reached -20%. The average did not include the values of capacitors that failed to maintain insulation due to short-circuit failure before the capacitance change rate had reached -20%, that is, these values were excluded from the average calculation.

(5) Results of Measurement and Evaluation

Tables 3 and 5 show the content of each component in the biaxially stretched films of the Examples and Comparative Examples, as well as measurement results of the reduced peak height Spk and the average particle size of the inorganic particles incorporated. Further, Tables 4 and 6 show evaluation results of film formation properties and film properties of the biaxially stretched films obtained in the Examples and Comparative Examples, and evaluation and measurement results of capacitor characteristics of capacitors obtained using the films.

Table 3

| | Content of each component in biaxially stretched film | | | | | | | | | | | | Average particle size of inorganic particles | Spk |
|---|---|---|---|---|---|---|---|---|---|---|---|---|---|---|
| | (A) sPS | (B) PPE | | | | | (C) SEBS | (D) aPS | (E) Titanium oxide | (F) Silica | (G) Spherical silicone | (H) Antioxidant | | |
| | mass% | mass% | Source resin (mass%) | mass% | Source resin (mass%) | mass% | mass% | mass% | mass% | mass% | mass% | mass% | µm | µm |
| Example 1A | 66.1 | 21.0 | PPE1 | 14.0 | PPE2 | 7.0 | 6.1 | 6.0 | 0.6 | 0.0 | 0.0 | 0.2 | 0.2 | 0.10 |
| Example 2A | 65.9 | 21.0 | PPE1 | 14.0 | PPE2 | 7.0 | 6.1 | 6.0 | 0.8 | 0.0 | 0.0 | 0.2 | 0.2 | 0.11 |
| Example 3A | 65.5 | 21.0 | PPE1 | 14.0 | PPE2 | 7.0 | 6.0 | 6.0 | 1.3 | 0.0 | 0.0 | 0.2 | 0.2 | 0.13 |
| Example 4A | 65.0 | 21.0 | PPE1 | 14.0 | PPE2 | 7.0 | 5.8 | 6.0 | 2.0 | 0.0 | 0.0 | 0.2 | 0.2 | 0.15 |
| Example 5A | 64.5 | 21.0 | PPE1 | 14.0 | PPE2 | 7.0 | 5.7 | 6.0 | 2.6 | 0.0 | 0.0 | 0.2 | 0.2 | 0.17 |
| Example 6A | 65.9 | 21.0 | PPE1 | 14.0 | PPE2 | 7.0 | 6.1 | 6.0 | 0.8 | 0.0 | 0.0 | 0.2 | 0.1 | 0.08 |
| Example 7A | 65.9 | 21.0 | PPE1 | 14.0 | PPE2 | 7.0 | 6.1 | 6.0 | 0.8 | 0.0 | 0.0 | 0.2 | 0.4 | 0.14 |
| Example 8A | 66.1 | 21.0 | PPE1 | 14.0 | PPE2 | 7.0 | 6.1 | 6.0 | 0.8 | 0.0 | 0.0 | 0.01 | 0.2 | 0.11 |
| Example 9A | 66.0 | 21.0 | PPE1 | 14.0 | PPE2 | 7.0 | 6.1 | 6.0 | 0.8 | 0.0 | 0.0 | 0.09 | 0.2 | 0.11 |
| Example 10A | 65.8 | 21.0 | PPE1 | 14.0 | PPE2 | 7.0 | 6.1 | 6.0 | 0.8 | 0.0 | 0.0 | 0.3 | 0.2 | 0.11 |
| Example 11A | 65.8 | 21.0 | PPE1 | 14.0 | PPE2 | 7.0 | 6.0 | 6.0 | 0.8 | 0.0 | 0.0 | 0.4 | 0.2 | 0.09 |
| Comparative Example 1A | 67.5 | 30.0 | Z4 | 30.0 | 0.0 | 0.0 | 0.0 | 0.0 | 0.0 | 0.0 | 0.5 | 2.0 | 0.3 | 0.04 |
| Comparative Example 2A | 98.5 | 0.0 | 0.0 | 0.0 | 0.0 | 0.0 | 0.0 | 0.0 | 0.0 | 0.5 | 0.0 | 1.0 | 1.1 | 0.20 |
| Comparative Example 3A | 65.6 | 21.0 | PPE1 | 21.0 | 0.0 | 0.0 | 4.4 | 9.0 | 0.0 | 0.0 | 0.0 | 0.0 | - | 0.02 |

Table 4

| | Evaluation | | | | | | | |
|---|---|---|---|---|---|---|---|---|
| | Film-forming stability | Dielectric breakdown strength ($V_{DC}$/ μm) | | Element end face misalignment | Heat shrinkage rate (%) | | Stepwise increase voltage test at 120°C (n=6) | |
| | | 120°C | 150°C | | Machine direction | Traverse direction | Number of elements in which short-circuit failure did not occur before the capacitance change rate had reached -90% (pieces) | Potential gradient when the capacitance change rate reached 20% (V/μm) |
| Example 1A | A | 528 | 521 | B | 5.9 | 3.0 | 5 | 379 |
| Example 2A | A | 522 | 515 | A | 5.9 | 3.0 | 6 | 397 |
| Example 3A | A | 520 | 513 | A | 5.9 | 3.0 | 6 | 397 |
| Example 4A | A | 514 | 510 | A | 5.8 | 3.0 | 6 | 379 |
| Example 5A | A | 504 | 496 | A | 5.8 | 2.9 | 6 | 379 |
| Example 6A | A | 525 | 519 | B | 5.9 | 3.0 | 5 | 379 |
| Example 7A | A | 496 | 488 | A | 5.8 | 3.0 | 6 | 362 |
| Example 8A | A | 529 | 517 | A | 6.0 | 3.0 | 6 | 379 |
| Example 9A | A | 525 | 518 | A | 5.9 | 3.0 | 6 | 397 |
| Example 10A | A | 519 | 516 | A | 5.8 | 3.0 | 6 | 397 |
| Example 11A | A | 492 | 489 | B | 5.7 | 2.9 | 5 | 362 |
| Comparative Example 1A | C | 361 | 362 | C | 2.5 | 0.5 | 1 | 224 |
| Comparative Example 2A | C | 369 | 368 | A | 7.6 | 1.6 | 1 | 224 |
| Comparative Example 3A | A | 521 | 506 | D | 9.0 | 3.2 | 0 | 362 |

Table 5

| | Content of each component in biaxially stretched film | | | | | | | | | | | | Average particle size of inorganic particles | Spk |
|---|---|---|---|---|---|---|---|---|---|---|---|---|---|---|
| | (A) sPS | (B) PPE | | | | | (C) SEBS | (D) aPS | (E) Titanium oxide | (F) Silica | (G) Spherical silicone | | | |
| | mass% | mass% | Source resin (mass%) | | Source resin (mass%) | | mass% | mass% | mass% | mass% | mass% | | μm | μm |
| Example 1B | 81.3 | 10.5 | PPE1 | 7.0 | PPE2 | 3.5 | 4.7 | 3.0 | 0.50 | 0.00 | 0.00 | | 0.2 | 0.06 |
| Example 2B | 76.3 | 14.0 | PPE1 | 7.0 | PPE2 | 7.0 | 6.2 | 3.0 | 0.50 | 0.00 | 0.00 | | 0.2 | 0.07 |
| Example 3B | 66.3 | 21.0 | PPE1 | 17.5 | PPE2 | 3.5 | 4.7 | 7.5 | 0.50 | 0.00 | 0.00 | | 0.2 | 0.12 |
| Example 4B | 66.3 | 21.0 | PPE1 | 14.0 | PPE2 | 7.0 | 6.2 | 6.0 | 0.50 | 0.00 | 0.00 | | 0.2 | 0.15 |
| Example 5B | 66.5 | 21.0 | PPE1 | 14.0 | PPE2 | 7.0 | 6.2 | 6.0 | 0.30 | 0.00 | 0.00 | | 0.2 | 0.15 |
| Example 6B | 66.5 | 21.0 | PPE1 | 14.0 | PPE2 | 7.0 | 6.2 | 6.0 | 0.25 | 0.00 | 0.00 | | 0.2 | 0.12 |
| Example 7B | 66.2 | 21.0 | PPE1 | 14.0 | PPE2 | 7.0 | 6.1 | 6.0 | 0.70 | 0.00 | 0.00 | | 0.1 | 0.16 |
| Example 8B | 66.3 | 21.0 | PPE1 | 14.0 | PPE2 | 7.0 | 6.2 | 6.0 | 0.50 | 0.00 | 0.00 | | 0.4 | 0.19 |
| Example 9B | 66.3 | 21.0 | PPE1 | 14.0 | PPE2 | 7.0 | 6.2 | 6.0 | 0.00 | 0.50 | 0.00 | | 0.5 | 0.16 |
| Example 10B | 62.5 | 23.8 | PPE1 | 11.9 | PPE2 | 11.9 | 8.1 | 5.1 | 0.50 | 0.00 | 0.00 | | 0.2 | 0.16 |
| Example 11B | 56.3 | 28.0 | PPE1 | 14.0 | PPE2 | 14.0 | 9.2 | 6.0 | 0.50 | 0.00 | 0.00 | | 0.2 | 0.19 |
| Example 12B | 66.3 | 21.0 | PPE1 | 0.0 | PPE2 | 21.0 | 12.2 | 0.0 | 0.50 | 0.00 | 0.00 | | 0.2 | 0.09 |
| Example 13B | 51.2 | 33.6 | PPE1 | 16.8 | PPE2 | 16.8 | 7.5 | 7.2 | 0.50 | 0.00 | 0.00 | | 0.2 | 0.19 |
| Example 14B | 66.3 | 23.0 | PPE1 | 14.0 | PPE3 | 9.0 | 4.2 | 6.0 | 0.50 | 0.00 | 0.00 | | 0.2 | 0.17 |
| Comparative Example 1B | 69.5 | 30.0 | X6 | 30.0 | PPE2 | 0.0 | 0.0 | 0.0 | 0.00 | 0.00 | 0.50 | | 0.3 | 0.04 |
| Comparative Example 2B | 99.6 | 0.0 | PPE1 | 0.0 | PPE2 | 0.0 | 0.0 | 0.0 | 0.00 | 0.40 | 0.00 | | 0.3 | 0.04 |
| Comparative Example 3B | 65.6 | 21.0 | PPE1 | 21.0 | PPE2 | 0.0 | 4.4 | 9.0 | 0.00 | 0.00 | 0.00 | | - | 0.02 |
| Comparative Example 4B | 65.5 | 18.9 | PPE1 | 18.9 | PPE2 | 0.0 | 4.4 | 11.1 | 0.10 | 0.00 | 0.00 | | 0.2 | 0.04 |

(continued)

| | Content of each component in biaxially stretched film | | | | | | | | | | | Average particle size of inorganic particles | Spk |
|---|---|---|---|---|---|---|---|---|---|---|---|---|---|
| | (A) sPS | (B) PPE | | | | | (C) SEBS | (D) aPS | (E) Titanium oxide | (F) Silica | (G) Spherical silicone | | |
| | mass% | mass% | Source resin (mass%) | | Source resin (mass%) | | mass% | mass% | mass% | mass% | mass% | µm | µm |
| Comparative Example 5B | 45.2 | 50.0 | PPE1 | 25.0 | PPE2 | 25.0 | 4.3 | 0.0 | 0.50 | 0.00 | 0.00 | 0.2 | - |
| Comparative Example 6B | 66.3 | 19.6 | PPE1 | 12.6 | PPE2 | 7.0 | 6.2 | 7.4 | 0.00 | 0.50 | 0.00 | 1.0 | 0.31 |
| Comparative Example 7B | 65.8 | 19.6 | PPE1 | 12.6 | PPE2 | 7.0 | 6.0 | 7.4 | 1.20 | 0.00 | 0.00 | 0.2 | 0.32 |

Table 6

| | Evaluation | | | | | | | |
|---|---|---|---|---|---|---|---|---|
| | Film-forming stability | Dielectric breakdown strength ($V_{DC}$/ μm) | | Element end face misalignment | Heat shrinkage rate (%) | | Stepwise increase voltage test at 120°C (n=6) | |
| | | 120°C | 150°C | | Machine direction | Traverse direction | Number of elements in which short-circuit failure did not occur before the capacitance change rate had reached -90% (pieces) | Potential gradient when the capacitance change rate reached 20% (V/μm) |
| Example 1B | B | 499 | 480 | B | 6.3 | 2.1 | 5 | 293 |
| Example 2B | A | 508 | 491 | B | 5.7 | 1.9 | 5 | 328 |
| Example 3B | A | 521 | 517 | A | 5.3 | 1.8 | 6 | 345 |
| Example 4B | A | 516 | 509 | A | 5.1 | 1.7 | 6 | 345 |
| Example 5B | A | 528 | 520 | A | 5.0 | 1.7 | 6 | 345 |
| Example 6B | A | 530 | 522 | A | 5.0 | 1.7 | 6 | 362 |
| Example 7B | A | 522 | 516 | A | 4.9 | 1.6 | 6 | 345 |
| Example 8B | A | 497 | 485 | A | 4.9 | 1.6 | 6 | 328 |
| Example 9B | A | 502 | 490 | A | 4.9 | 1.5 | 6 | 345 |
| Example 10B | A | 523 | 519 | A | 4.6 | 1.5 | 6 | 345 |
| Example 11B | A | 527 | 520 | A | 4.3 | 1.4 | 6 | 345 |
| Example 12B | A | 524 | 515 | B | 4.0 | 1.2 | 5 | 345 |
| Example 13B | C | 501 | 500 | A | 3.8 | 1.2 | 6 | 328 |
| Example 14B | A | 522 | 521 | A | 5.1 | 1.8 | 6 | 345 |
| Comparative Example 1B | C | 503 | 451 | C | 2.7 | 0.7 | 1 | 345 |
| Comparative Example 2B | C | 428 | 368 | C | 7.7 | 1.7 | 1 | 241 |
| Comparative Example 3B | A | 532 | 525 | D | 7.1 | 3.3 | 0 | 362 |

(continued)

| | Evaluation | | | | | | | |
|---|---|---|---|---|---|---|---|---|
| | Film-forming stability | Dielectric breakdown strength ($V_{DC}$/ μm) | | Element end face misalignment | Heat shrinkage rate (%) | | Stepwise increase voltage test at 120°C (n=6) | |
| | | 120°C | 150°C | | Machine direction | Traverse direction | Number of elements in which short-circuit failure did not occur before the capacitance change rate had reached -90% (pieces) | Potential gradient when the capacitance change rate reached 20% (V/μm) |
| Comparative Example 4B | A | 527 | 519 | C | 7.3 | 3.6 | 1 | 345 |
| Comparative Example 5B | D Breakage in heat fixation | - | - | - | - | - | - | - |
| Comparative Example 6B | C | 467 | 429 | A | 5.4 | 1.9 | 6 | 293 |
| Comparative Example 7B | B | 438 | 375 | A | 5.4 | 1.9 | 6 | 241 |

The above results clearly show that when using a film obtained in any of Examples 1A to 11A and Examples 1B to 14B, that is, when using a film comprising a syndiotactic polystyrene resin, and a polyphenylene ether resin, wherein the content of the syndiotactic polystyrene resin in the film is 50 mass% or higher, the content of the polyphenylene ether resin in the film is 10 mass% or higher, (A) the film contains titanium oxide particles as inorganic particles, and the content of the titanium oxide particles in the film is 0.55 mass% or higher and 3 mass% or lower, and/or (B) reduced peak height Spk of at least one surface is 0.05 um or more and 0.30 um or less, the film can form a capacitor with excellent safety function operability and has a high dielectric breakdown strength at high temperatures and good element-winding suitability.

**Claims**

**1.** A film comprising

a syndiotactic polystyrene resin, and
a polyphenylene ether resin,

the content of the syndiotactic polystyrene resin in the film being 50 mass% or higher,
the content of the polyphenylene ether resin in the film being 10 mass% or higher,

wherein

(A) the film contains titanium oxide particles as inorganic particles, and the content of the titanium oxide particles in the film is 0.55 mass% or higher and 3 mass% or lower, and/or
(B) at least one surface of the film has a reduced peak height Spk of 0.05 um or more and 0.30 um or less.

**2.** The film according to claim 1, wherein the content of the syndiotactic polystyrene resin in the film is 50 mass% or higher and 85 mass% or lower.

**3.** The film according to claim 1 or 2, wherein the content of the polyphenylene ether resin in the film is 10 mass% or higher and 45 mass% or lower.

**4.** The film according to any one of claims 1 to 3, comprising a styrene-based thermoplastic elastomer.

**5.** The film according to claim 4, wherein the content of the styrene-based thermoplastic elastomer in the film is 1 mass% or higher and 20 mass% or lower.

**6.** The film according to claim 4 or 5, wherein the styrene-based thermoplastic elastomer is a styrene-ethylenebutylene-styrene block copolymer (SEBS).

**7.** The film according to any one of claims 1 to 6, comprising an antioxidant.

**8.** The film according to claim 7, wherein the content of the antioxidant in the film is 0.01 mass% or higher and lower than 0.5 mass%.

**9.** The film according to claim 7 or 8, wherein the antioxidant contains a hindered phenol antioxidant and a phosphorus antioxidant.

**10.** The film according to any one of claims 1 to 9, comprising inorganic particles.

**11.** The film according to claim 10, wherein the content of the inorganic particles in the film is 0.2 mass% or higher and 1.0 mass% or lower.

**12.** The film according to claim 10 or 11, wherein the inorganic particles have an average particle size of 0.1 um or more and 0.5 um or less.

**13.** The film according to any one of claims 10 to 12, wherein the inorganic particles are metal oxide particles.

**14.** The film according to any one of claims 1 to 13, comprising titanium oxide particles, wherein the titanium oxide particles have an average particle size of 0.1 um or more and 0.25 um or less.

**15.** The film according to any one of claims 1 to 14, wherein at least one surface of the film has a reduced peak height Spk of 0.05 um or more and 0.30 um or less.

**16.** The film according to any one of claims 1 to 15, comprising a film-like layer of a resin composition containing two or more kinds of modified polyphenylene ethers having different melt flow rates.

**17.** The film according to any one of claims 1 to 16, having a thermal shrinkage rate of 1% or higher and 10% or lower in a film-forming direction.

**18.** The film according to any one of claims 1 to 17, which is a biaxially stretched film.

**19.** The film according to any one of claims 1 to 18, which is a single-layered film.

**20.** The film according to any one of claims 1 to 19, having a thickness of 10 um or less.

**21.** The film according to any one of claims 1 to 20, which is for use in a capacitor.

**22.** A film integrated with a metal layer, comprising

the film of any one of claims 1 to 21, and
a metal layer stacked on one or both sides of the film.

**23.** A capacitor comprising the film of any one of claims 1 to 21 or the film integrated with a metal layer of claim 22.

**INTERNATIONAL SEARCH REPORT**

International application No. **PCT/JP2022/006969**

**A. CLASSIFICATION OF SUBJECT MATTER**

***C08J 5/18***(2006.01)i; ***B29C 55/12***(2006.01)i; ***B32B 15/082***(2006.01)i; ***C08K 3/22***(2006.01)i; ***C08L 25/06***(2006.01)i; ***C08L 71/12***(2006.01)i; ***H01G 4/32***(2006.01)i
FI: C08J5/18 CET; B29C55/12; B32B15/082 Z; C08K3/22; C08L25/06; C08L71/12; H01G4/32 511H; H01G4/32 511K; H01G4/32 511L

According to International Patent Classification (IPC) or to both national classification and IPC

**B. FIELDS SEARCHED**

Minimum documentation searched (classification system followed by classification symbols)

C08J5/18; C08K; C08L; H01G4/32; B29C55/00-55/30; B32B

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-246372 A (TEIJIN LTD) 13 December 2012 (2012-12-13) entire text | 1-23 |
| A | JP 2011-111592 A (TEIJIN LTD) 09 June 2011 (2011-06-09) entire text | 1-23 |
| A | JP 2-218724 A (IDEMITSU KOSAN CO LTD) 31 August 1990 (1990-08-31) entire text | 1-23 |
| A | JP 1-245052 A (SUMITOMO CHEM CO LTD) 29 September 1989 (1989-09-29) entire text | 1-23 |
| A | JP 10-72541 A (IDEMITSU KOSAN CO LTD) 17 March 1998 (1998-03-17) entire text | 1-23 |
| A | JP 2019-172972 A (TORAY INDUSTRIES) 10 October 2019 (2019-10-10) entire text | 1-23 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 April 2022** | **10 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2022/006969

C. DOCUMENTS CONSIDERED TO BE RELEVANT

| Category* | Citation of document, with indication, where appropriate, of the relevant passages | Relevant to claim No. |
|---|---|---|
| A | WO 2019/131815 A1 (OJI HOLDINGS CORP) 04 July 2019 (2019-07-04) entire text | 1-23 |

Form PCT/ISA/210 (second sheet) (January 2015)

**INTERNATIONAL SEARCH REPORT**
**Information on patent family members**

International application No.
**PCT/JP2022/006969**

| Patent document cited in search report | Publication date (day/month/year) | Patent family member(s) | Publication date (day/month/year) |
|---|---|---|---|
| JP 2012-246372 A | 13 December 2012 | US 2014/0050913 A1 | |
| | | WO 2012/147777 A1 | |
| | | EP 2712883 A1 | |
| JP 2011-111592 A | 09 June 2011 | US 2012/0232209 A1 | |
| | | WO 2011/065585 A1 | |
| | | EP 2508553 A1 | |
| | | CN 102712770 A | |
| | | KR 10-2012-0099097 A | |
| JP 2-218724 A | 31 August 1990 | US 5109068 A | |
| | | EP 611802 A2 | |
| | | AU 4089689 A | |
| | | KR 10-1990-0003275 A | |
| JP 1-245052 A | 29 September 1989 | US 5071912 A | |
| | | EP 442180 A1 | |
| JP 10-72541 A | 17 March 1998 | (Family: none) | |
| JP 2019-172972 A | 10 October 2019 | (Family: none) | |
| WO 2019/131815 A1 | 04 July 2019 | US 2020/0377706 A1 | |
| | | EP 3733743 A1 | |
| | | KR 10-2020-0098502 A | |
| | | CN 111566149 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011111592 A